# EUROPEAN PATENT APPLICATION

(11) **EP 4 851 000 A1**
(43) Date of publication of application: **09.12.2026**
(21) Application number: 24947306.7
(22) Date of filing: 08.07.2024
(51) Int. Cl.: B60W 30/12, B60W 40/02

(54) **SIGNAL PROCESSING DEVICE AND VEHICLE CONTROL DEVICE INCLUDING SAME**

(71) Applicant: LG Electronics Inc., Yeongdeungpo-gu Seoul 07336 (KR)
(72) Inventor: LEE, Suyeon, Seoul 06772 (KR); ROH, Heejun, Seoul 06772 (KR); SIM, Woojin, Seoul 06772 (KR)
(74) Representative: Vossius & Partner Patentanwälte Rechtsanwälte mbB
(86) International application number: PCT/KR2024/009696
(87) International publication number: WO 2026/014561

(57) **Abstract**

A signal processing device and a vehicle control device including the same according to an embodiment of the present disclosure include a processor to receive a front image from a camera and process the received image, wherein the processor is configured to detect lines based on the front, and perform a lane keeping mode based on the detected lines, wherein in a first mode of the lane keeping mode, the processor is configured to control a steering driver to maintain a first distance from a first line of first and second lines adjacent to each other, and in a second mode of the lane keeping mode, control the steering driver to maintain a second distance from the first line, the second distance being different from the first distance. Accordingly, a vehicle-to-lane line distance may be adjusted adaptively by reflecting a driving situation during operation in the lane keeping mode.

## Description

### BACKGROUND

### 1. Technical Field

The present disclosure relates to a signal processing device and a vehicle control device including the same, and more particularly to a signal processing device capable of adaptively adjusting a distance between a vehicle and a lane line by reflecting a driving situation during operation in a lane keeping mode, and a vehicle control device including the signal processing device.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The vehicle internal signal processing device receives sensor data from various vehicle internal sensor devices and processes the received sensor data for Advanced Driver Assistance System (ADAS) or autonomous driving, and the like.

U.S. Patent No. US11840220 as related art discloses a vehicle steering system for controlling the steering wheel to be in neutral position so as to maintain straight-ahead driving in a lane.

However, the related art has a drawback in that the vehicle steering system is controlled to position a vehicle in the center of a lane without considering driving situations or conditions.

### SUMMARY

It is an objective of the present disclosure to provide a signal processing device capable of adaptively adjusting a distance between a vehicle and a lane line (hereinafter referred to as a vehicle-to-lane line distance) by reflecting a driving situation during operation in a lane keeping mode, and a vehicle control device including the signal processing device.

Meanwhile, it is another objective of the present disclosure to provide a signal processing device capable of adaptively adjusting a vehicle-to-lane line distance based on an emergency vehicle approaching from behind, and a vehicle control device including the signal processing device.

Meanwhile, it is yet another objective of the present disclosure to provide a signal processing device capable of adaptively adjusting a vehicle-to-lane line distance based on situations at the sides of a vehicle, and a vehicle control device including the signal processing device.

Meanwhile, it is further another objective of the present disclosure to provide a signal processing device capable of adaptively adjusting a vehicle-to-lane line distance based on driving proficiency or the number of occupants in a vehicle, and a vehicle control device including the signal processing device.

Meanwhile, it is still another objective of the present disclosure to provide a signal processing device capable of adaptively adjusting a vehicle-to-lane line distance based on attention or emotion information of a driver, and a vehicle control device including the signal processing device.

In accordance with an aspect of the present disclosure, the above and other objectives can be accomplished by providing a signal processing device and a vehicle control device including the same, which include a processor configured to receive a front image from a camera mounted in a vehicle and to process the received image, wherein the processor is configured to detect lines based on the front image from the camera, and to perform a lane keeping mode based on the detected lines, wherein in a first mode of the lane keeping mode, the processor is configured to control a steering driver to maintain a first distance from a first line of first and second lines adjacent to each other, and in a second mode of the lane keeping mode, the processor is configured to control the steering driver to maintain a second distance from the first line, the second distance being different from the first distance.

Meanwhile, based on a rear image from the camera, the processor may be configured to detect an emergency vehicle in the rear image, and to perform the second mode of the lane keeping mode based on the emergency vehicle.

Meanwhile, the processor may be configured to perform the second mode of the lane keeping mode based on the emergency vehicle behind the vehicle, and to decrease a distance from the first line as the vehicle becomes closer to the emergency vehicle.

Meanwhile, in response to a road border, a guard rail, or a second vehicle having a size larger than or equal to a reference size being located on a side of the vehicle based on a side image or the front image from the camera, the processor may be configured to perform the second mode of the lane keeping mode.

Meanwhile, the processor may be configured to detect a second vehicle located on a side of the vehicle based on the side image or the front image from the camera, and to change the second distance in the second mode of the lane keeping mode based on a size of the second vehicle.

Meanwhile, the processor may be configured to change the second distance based on a speed of the vehicle in the second mode of the lane keeping mode.

Meanwhile, the processor may be configured to detect pedestrians on a side of the vehicle based on the side image or the front image from the camera, and to change the second distance based on a number or position of the detected pedestrians.

Meanwhile, the processor may be configured to change the second distance in the second mode of the lane keeping mode based on driving proficiency of a driver, a number of occupants in the vehicle, or whether a passenger seat is occupied.

Meanwhile, the processor may be configured to detect attention of a driver based on a vehicle internal image from an internal camera, and to change the second distance in the second mode of the lane keeping mode based on an attention direction of the driver.

Meanwhile, in a manual driving mode, the processor may be configured to detect attention of a driver based on a vehicle internal image from an internal camera and to detect a distance from the first line in the front image, and may be configured to perform learning based on the attention of the driver and the distance from the first line and to store a learning result in a memory.

Meanwhile, in response to performing the second mode of the lane keeping mode, the processor may be configured to set the second distance based on the learning result.

Meanwhile, in a manual driving mode, the processor may be configured to detect emotion information of a driver based on a vehicle internal image from an internal camera and to detect a distance from the first line in the front image, and may be configured to perform learning based on the emotion information of the driver and the distance from the first line and to store a learning result in a memory.

Meanwhile, in a manual driving mode, the processor may be configured to detect a distance from the first line in the front image, and to store a speed of the vehicle and distance information from the first line in a memory, and in response to performing the second mode of the lane keeping mode, the processor may be configured to set the second distance based on the speed of the vehicle and the distance information from the first line.

Meanwhile, the processor may be configured to execute a plurality of virtual machines on a hypervisor, wherein some virtual machine among the plurality of virtual machines may be configured to execute a lane line detection application based on the front image and to execute a plurality of microservices for the lane line detection application.

Meanwhile, another virtual machine among the plurality of virtual machines may be configured to execute an alert application for the lane keeping mode, wherein a safety level of the alert application may be lower than a safety level of the lane line detection application.

In accordance with another aspect of the present disclosure, the above and other objectives can be accomplished by providing a signal processing device and a vehicle control device including the same, which include a processor configured to receive a front image from a camera mounted in a vehicle and to process the received image, wherein the processor is configured to detect lines based on the front image from the camera, and to perform a lane keeping mode based on the detected lines, wherein in a first mode of the lane keeping mode, the processor is configured to control a steering driver to stay in a center of a first line and a second line adjacent to each other, and in a second mode of the lane keeping mode, the processor is configured to control the steering driver to be closer to either the first line or the second line.

Meanwhile, in the first mode of the lane keeping mode, the processor may be configured to control the steering driver to maintain a first distance from the first line, and in the second mode of the lane keeping mode, the processor may be configured to control the steering driver to maintain a second distance from the first line, the second distance being different from the first distance.

### EFFECTS OF THE DISCLOSURE

According to an embodiment of the present disclosure, a signal processing device and a vehicle control device including the same according to an embodiment of the present disclosure include a processor configured to receive a front image from a camera mounted in a vehicle and to process the received image, wherein the processor is configured to detect lines based on the front image from the camera, and to perform a lane keeping mode based on the detected lines, wherein in a first mode of the lane keeping mode, the processor is configured to control a steering driver to maintain a first distance from a first line of first and second lines adjacent to each other, and in a second mode of the lane keeping mode, the processor is configured to control the steering driver to maintain a second distance from the first line, the second distance being different from the first distance. Accordingly, a vehicle-to-lane line distance may be adjusted adaptively by reflecting a driving situation during operation in the lane keeping mode.

Meanwhile, based on a rear image from the camera, the processor may be configured to detect an emergency vehicle in the rear image, and to perform the second mode of the lane keeping mode based on the emergency vehicle. Accordingly, a vehicle-to-lane line distance may be adjusted adaptively based on the emergency vehicle approaching from behind.

Meanwhile, the processor may be configured to perform the second mode of the lane keeping mode based on the emergency vehicle behind the vehicle, and to decrease a distance from the first line as the vehicle becomes closer to the emergency vehicle. Accordingly, a vehicle-to-lane line distance may be adjusted adaptively based on the emergency vehicle approaching from behind.

Meanwhile, in response to a road border, a guard rail, or a second vehicle having a size larger than or equal to a reference size being located on a side of the vehicle based on a side image or the front image from the camera, the processor may be configured to perform the second mode of the lane keeping mode. Accordingly, a vehicle-to-lane line distance may be adjusted adaptively based on situations in front of the vehicle or at the sides of the vehicle.

Meanwhile, the processor may be configured to detect a second vehicle located on a side of the vehicle based on the side image or the front image from the camera, and to change the second distance in the second mode of the lane keeping mode based on a size of the second vehicle. Accordingly, a vehicle-to-lane line distance may be adjusted adaptively based on situations in front of the vehicle or at the sides of the vehicle.

Meanwhile, the processor may be configured to change the second distance based on a speed of the vehicle in the second mode of the lane keeping mode. Accordingly, a vehicle-to-lane line distance may be adjusted adaptively based on the vehicle speed.

Meanwhile, the processor may be configured to detect pedestrians on a side of the vehicle based on the side image or the front image from the camera, and to change the second distance based on a number or position of the detected pedestrians. Accordingly, a vehicle-to-lane line distance may be adjusted adaptively based on situations in front of the vehicle or at the sides of the vehicle.

Meanwhile, the processor may be configured to change the second distance in the second mode of the lane keeping mode based on driving proficiency of a driver, a number of occupants in the vehicle, or whether a passenger seat is occupied. Accordingly, a vehicle-to-lane line distance may be adjusted adaptively based on the driving proficiency of the driver or the number of occupants in the vehicle.

Meanwhile, the processor may be configured to detect attention of a driver based on a vehicle internal image from an internal camera, and to change the second distance in the second mode of the lane keeping mode based on an attention direction of the driver. Accordingly, a vehicle-to-lane line distance may be adjusted adaptively based on the attention direction of the driver.

Meanwhile, in a manual driving mode, the processor may be configured to detect attention of a driver based on a vehicle internal image from an internal camera and to detect a distance from the first line in the front image, and may be configured to perform learning based on the attention of the driver and the distance from the first line and to store a learning result in a memory. Accordingly, a vehicle-to-lane line distance may be adjusted adaptively based on the attention direction of the driver.

Meanwhile, in response to performing the second mode of the lane keeping mode, the processor may be configured to set the second distance based on the learning result. Accordingly, a vehicle-to-lane line distance may be adjusted adaptively based on the learning result.

Meanwhile, in a manual driving mode, the processor may be configured to detect emotion information of a driver based on a vehicle internal image from an internal camera and to detect a distance from the first line in the front image, and may be configured to perform learning based on the emotion information of the driver and the distance from the first line and to store a learning result in a memory. Accordingly, a vehicle-to-lane line distance may be adjusted adaptively based on the emotion information of the driver.

Meanwhile, in a manual driving mode, the processor may be configured to detect a distance from the first line in the front image, and to store a speed of the vehicle and distance information from the first line in a memory, and in response to performing the second mode of the lane keeping mode, the processor may be configured to set the second distance based on the speed of the vehicle and the distance information from the first line. Accordingly, a vehicle-to-lane line distance may be adjusted adaptively based on the information in the manual driving mode.

Meanwhile, the processor may be configured to execute a plurality of virtual machines on a hypervisor, wherein some virtual machine among the plurality of virtual machines may be configured to execute a lane line detection application based on the front image and to execute a plurality of microservices for the lane line detection application. Accordingly, the lane line detection application may be efficiently executed.

Meanwhile, another virtual machine among the plurality of virtual machines may be configured to execute an alert application for the lane keeping mode, wherein a safety level of the alert application may be lower than a safety level of the lane line detection application. Accordingly, the lane line detection application may be stably executed.

A signal processing device and a vehicle control device including the same according to another embodiment of the present disclosure include a processor configured to receive a front image from a camera mounted in a vehicle and to process the received image, wherein the processor is configured to detect lines based on the front image from the camera, and to perform a lane keeping mode based on the detected lines, wherein in a first mode of the lane keeping mode, the processor is configured to control a steering driver to stay in a center of a first line and a second line adjacent to each other, and in a second mode of the lane keeping mode, the processor is configured to control the steering driver to be closer to either the first line or the second line. Accordingly, a vehicle-to-lane line distance may be adjusted adaptively by reflecting a driving situation during operation in the lane keeping mode.

Meanwhile, in the first mode of the lane keeping mode, the processor may be configured to control the steering driver to maintain a first distance from the first line, and in the second mode of the lane keeping mode, the processor may be configured to control the steering driver to maintain a second distance from the first line, the second distance being different from the first distance. Accordingly, a vehicle-to-lane line distance may be adjusted adaptively by reflecting a driving situation during operation in the lane keeping mode.

### BRIEF DESCRIPTION OF THE DRAWINGS

FIG. 1 is a diagram illustrating an example of the exterior and interior of a vehicle;
FIG. 2 is a diagram illustrating an example of the architecture of a vehicle signal processing system;
FIG. 3A is a diagram illustrating an example of a vehicle display apparatus in a vehicle;
FIG. 3B is a diagram illustrating another example of a vehicle display apparatus in a vehicle;
FIG. 4 is an exemplary internal block diagram of the vehicle of FIG. 1;
FIGS. 5A to 5D are diagrams illustrating various examples of a vehicle control device;
FIG. 6 is an exemplary block diagram of a vehicle control device according to an embodiment of the present disclosure;
FIG. 7A is a diagram referred to in the description of a signal processing device according to an embodiment of the present disclosure;
FIG. 7B is a diagram illustrating an example of executing microservices according to an embodiment of the present disclosure;
FIG. 8 is a diagram illustrating an example of a signal processing system according to an embodiment of the present disclosure;
FIG. 9 is a diagram illustrating an example of a system driven in a signal processing device according to an embodiment of the present disclosure;
FIGS. 10A to 10C are diagrams referred to in the description of operation of a vehicle control device associated with the present disclosure;
FIG. 11A is a flowchart illustrating a method of operating a signal processing device according to an embodiment of the present disclosure;
FIG. 11B is a flowchart illustrating a method of operating a signal processing device according to another embodiment of the present disclosure; and
FIGS. 12A to 18 are diagrams referred to in the description of operation of FIGS. 11A and 11B.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

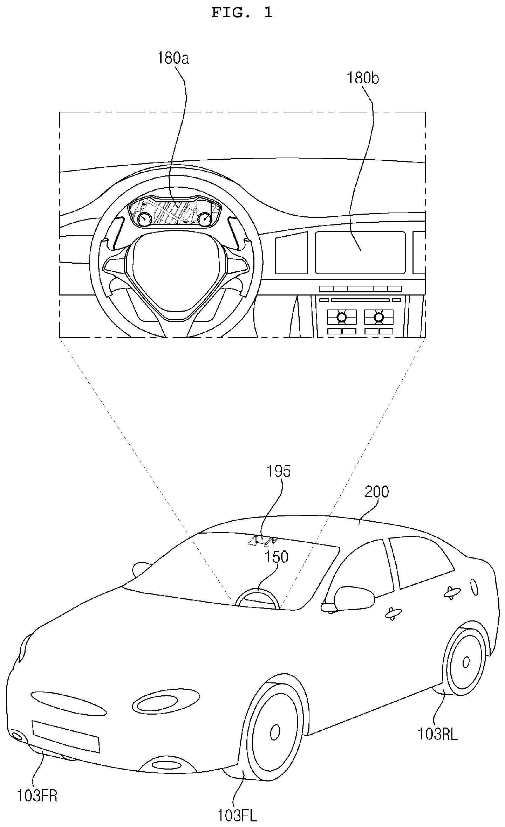

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

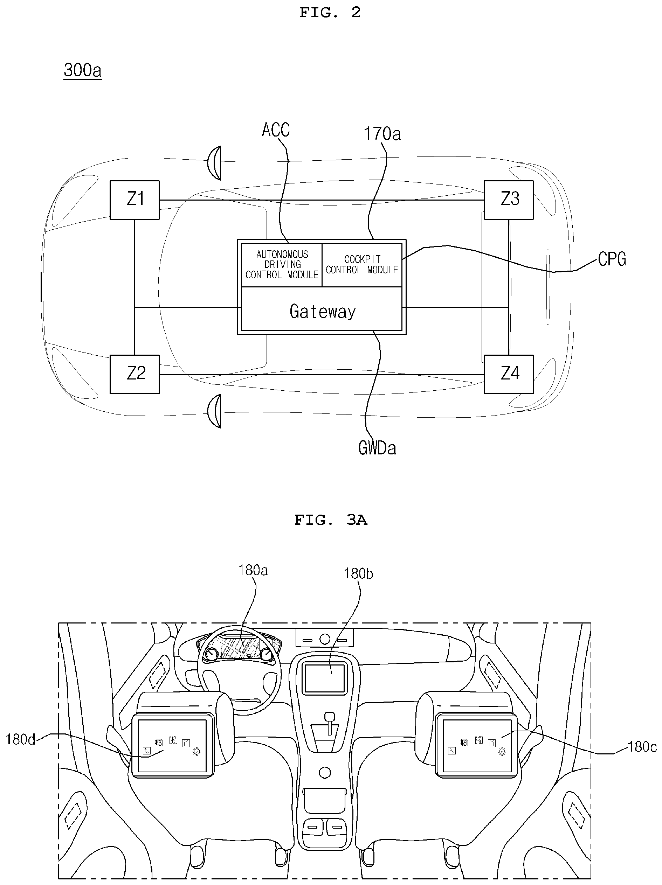

FIG. 2 is a diagram illustrating an example of the architecture of a vehicle signal processing system.

Referring to the figure, an architecture 300a of a vehicle signal processing system may correspond to a zone-based architecture.

Accordingly, vehicle internal sensor devices and processors may be mounted in each of a plurality of zones Z1 to Z4, and a signal processing device 170a including a vehicle communication gateway GWDa may be disposed at the center of the plurality of zones Z1 to Z4.

Meanwhile, the signal processing device 170a may further include an autonomous driving control module ACC, a cockpit control module CPG, etc., in addition to the vehicle communication gateway GWDa.

The vehicle communication gateway GWDa in the signal processing device 170a may be a High Performance Computing (HPC) gateway.

That is, as an integrated HPC gateway, the signal processing device 170a of FIG. 2 may exchange data with an external communication module (not shown) or processors (not shown) in the plurality of zones Z1 to Z4.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) may be mounted in the vehicle.

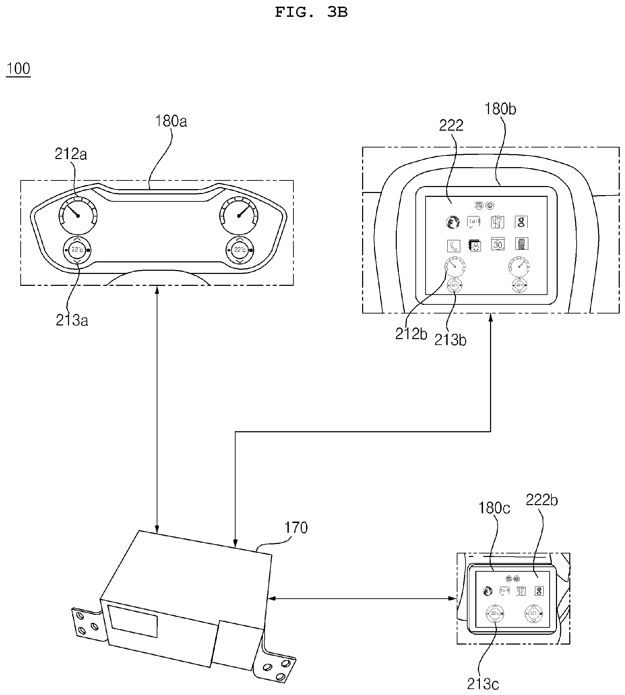

FIG. 3B is a diagram illustrating another example of a vehicle display apparatus in a vehicle.

A vehicle display apparatus 100 according to the embodiment of the present disclosure may include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines (not shown) may be executed by a hypervisor 505 in the processor 175.

The second virtual machine (not shown) may be operated for the first display 180a, and the third virtual machine (not shown) may be operated for the second display 180b.

Meanwhile, the first virtual machine (not shown) in the processor 175 may be configured to set a shared memory 508 based on the hypervisor 505 for transmission of the same data to the second virtual machine (not shown) and the third virtual machine (not shown). Consequently, the first display 180a and the second display 180b in the vehicle may display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle may divide and process data.

Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Consequently, at least one virtual machine may share the wheel speed sensor data of the vehicle.

Meanwhile, the vehicle display apparatus 100 according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

The signal processing device 170 according to the embodiment of the present disclosure may be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

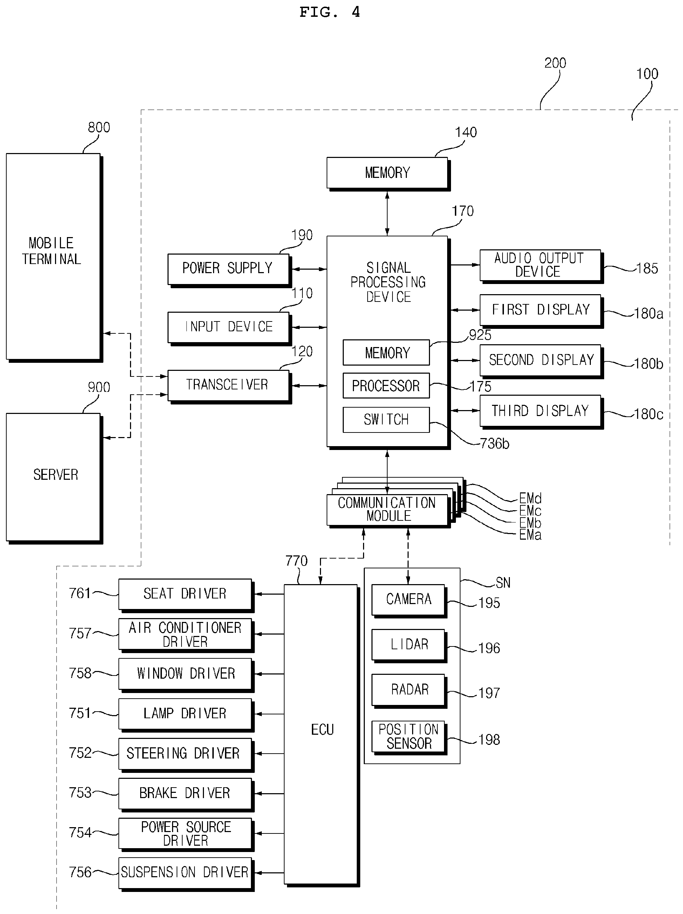

FIG. 4 is an exemplary internal block diagram of the vehicle of FIG. 1.

Referring to the figure, the vehicle 200 according to an embodiment of the present disclosure may include a lamp driver 751, a steering driver 752, a brake driver 753, a power source driver 754, a suspension driver 756, an air conditioner driver 755, a window driver 758, a seat driver 761, and the signal processing device 170.

Meanwhile, the vehicle 200 may further include an ECU 770, a plurality of sensor devices SN, and a plurality of communication modules EMa to EMd.

Meanwhile, the vehicle 200 according to an embodiment of the present disclosure may further include the vehicle display apparatus 100.

The vehicle display apparatus 100 according to the embodiment of the present disclosure may include an input device 110, a transceiver 120 for communication with an external device, the plurality of communication modules EMa to EMd for internal communication, a memory 140, the signal processing device 170, a plurality of displays 180a to 180c, an audio output device 185, and a power supply 190.

The plurality of communication modules EMa to EMd may be disposed in a plurality of zones Z1 to Z4, respectively, in FIG. 2.

Meanwhile, the signal processing device 170 may be provided therein with a communication switch 736b for data communication with the respective communication modules EM1 to EM4.

The respective communication modules EM1 to EM4 may perform data communication with the plurality of sensor devices SN or the ECU 770.

Meanwhile, each of the plurality of sensor devices SN may include a camera 195, a lidar sensor 196, a radar sensor 197, or a position sensor 198.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic state information, such as Transport Protocol Experts Group (TPEG) information, from a mobile terminal 800 or a server 900. To this end, the transceiver 120 may include a mobile communication module (not shown).

The plurality of communication modules EM1 to EM4 may receive sensor data and the like from the electronic control unit (ECU) 770 or the sensor device SN or a zonal signal processing device 170Z, and may transmit the received sensor data to the signal processing device 170.

Here, the sensor data may include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data may be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module may include a GPS module configured to receive GPS information or a position sensor 198.

Meanwhile, at least one of the plurality of communication modules EM1 to EM4 may transmit position information data sensed by the GPS module or the position sensor 198 to the signal processing device 170.

Meanwhile, at least one of the plurality of communication modules EM1 to EM4 may receive front image data of the vehicle, side-of-vehicle image data, rear image data of the vehicle, and obstacle-around-vehicle distance information from the camera 195, the lidar sensor 196, or the radar sensor 197, and may transmit the received information to the signal processing device 170.

The memory 140 may store various data necessary for overall operation of the vehicle display apparatus 100, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control the overall operation of each device in the vehicle display apparatus 100 or the vehicle 200.

For example, the signal processing device 170 may include a processor 175 configured to perform signal processing for the vehicle displays 180a and 180b.

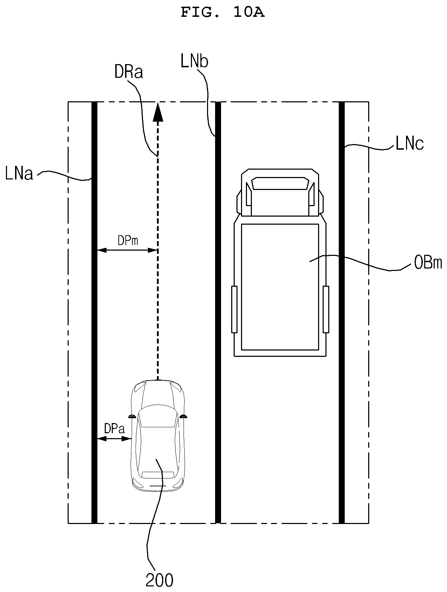

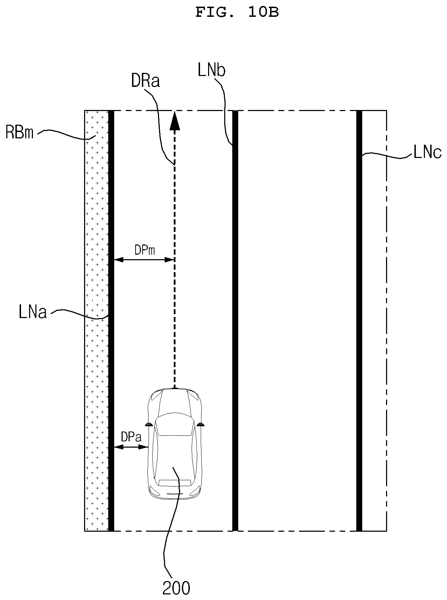

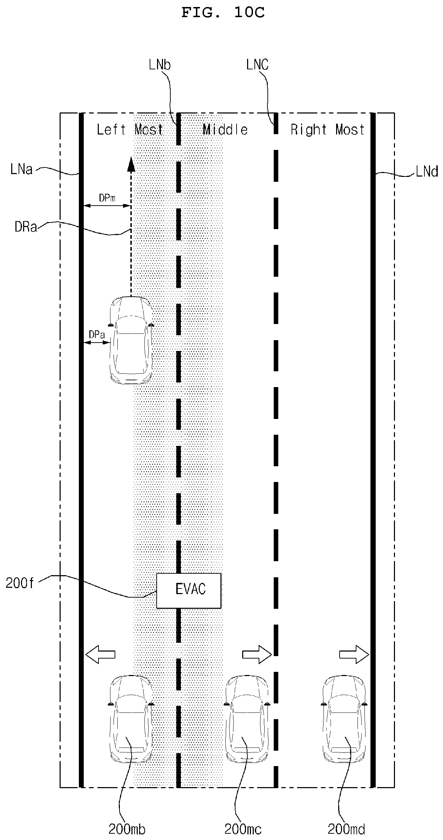

The processor 175 may execute the first to third virtual machines (not shown) on the hypervisor 505 (see FIG. 10) in the processor 175.

Among the first to third virtual machines (not shown) (see FIG. 10), the first virtual machine (not shown) may be called a server virtual machine, and the second and third virtual machines (not shown) and (not shown) may be called guest virtual machines.

For example, the first virtual machine (not shown) in the processor 175 may receive sensor data from the plurality of sensor devices, such as vehicle sensor data, position information data, camera image data, audio data, or touch input data, and may process and output the received sensor data.

As described above, the first virtual machine (not shown) may process most of the data, whereby 1:N data sharing may be achieved.

In another example, the first virtual machine (not shown) may directly receive and process CAN data, Ethernet data, audio data, radio data, USB data, and wireless communication data for the second and third virtual machines (not shown).

Further, the first virtual machine (not shown) may transmit the processed data to the second and third virtual machines (not shown).

Accordingly, only the first virtual machine (not shown), among the first to third virtual machines (not shown), may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

Meanwhile, the first virtual machine (not shown) may be configured to write data in the shared memory 508, whereby the second virtual machine (not shown) and the third virtual machine (not shown) share the same data.

For example, the first virtual machine (not shown) may be configured to write vehicle sensor data, the position information data, the camera image data, or the touch input data in the shared memory 508, whereby the second virtual machine (not shown) and the third virtual machine (not shown) share the same data. Consequently, 1:N data sharing may be achieved.

Eventually, the first virtual machine (not shown) may process most of the data, whereby 1:N data sharing may be achieved.

Meanwhile, the first virtual machine (not shown) in the processor 175 may be configured to set the shared memory 508 based on the hypervisor 505 in order to transmit the same data to the second virtual machine (not shown) and the third virtual machine (not shown).

Meanwhile, the signal processing device 170 may process various signals, such as an audio signal, an image signal, and a data signal. To this end, the signal processing device 170 may be implemented in the form of a system on chip (SOC).

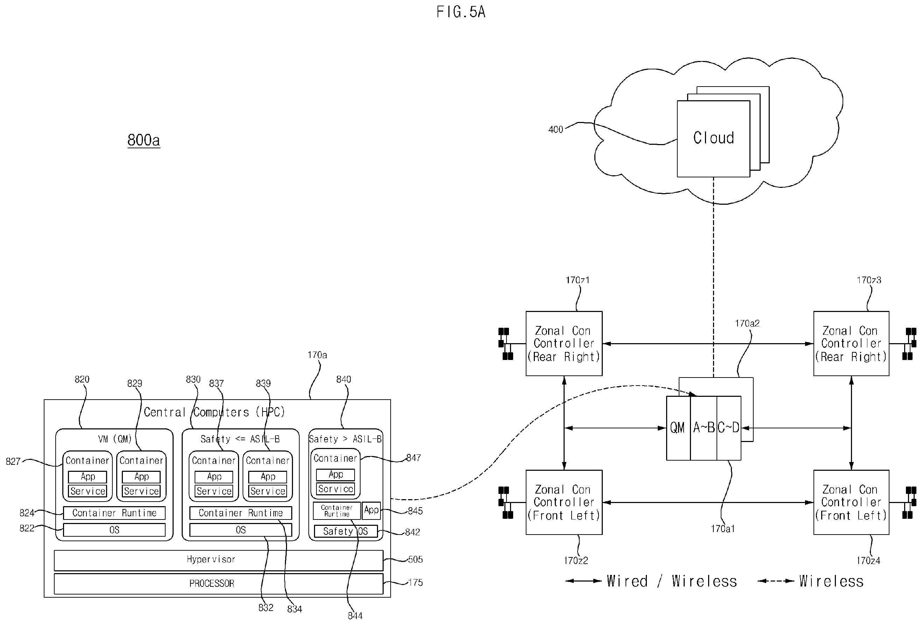

Meanwhile, the signal processing device 170 of FIG. 4 may be the same as signal processing devices 170, 170a1, and 170a2 of a vehicle control device of FIG. 5A and subsequent figures.

FIGS. 5A to 5D are diagrams illustrating various examples of a vehicle control device.

FIG. 5A is a diagram illustrating an example of a vehicle control device according to an embodiment of the present disclosure.

Referring to the figure, a vehicle control device 800a according to an embodiment of the present disclosure includes signal processing devices 170a1 and 170a2.

Meanwhile, the vehicle control device 800a according to an embodiment of the present disclosure may further include a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 may be referred to as a High Performance Computing (HPC) signal processing devices.

The plurality of zonal signal processing devices 170Z1 to 170Z4 may be located in the respective zones Z1 to Z4 and may transmit sensor data to the signal processing devices 170a1 and 170a2.

The signal processing devices 170a1 and 170a2 may receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 may exchange data with the communication device 120 based on wired communication.

Meanwhile, the data received by the signal processing devices 170a1 and 170a2 may include camera data or sensor data.

For example, the vehicle internal sensor data may include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data, and external vehicle lidar data.

Meanwhile, the camera data may include external vehicle camera data and vehicle internal camera data.

Meanwhile, the signal processing devices 170a1 and 170a2 may execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 may be a virtual machine corresponding to quality management (QM) which is the lowest risk level of the ASIL with no mandatory need.

The first virtual machine 820 may execute an operating system 822, a container runtime 824 on the operating system 822, and containers 827 and 829 on the container runtime 824.

The second virtual machine 820 may be a virtual machine corresponding to ASIL A or ASIL B with the combination of severity, exposure, and controllability values being 7 or 8.

The second virtual machine 820 may execute an operating system 832, a container runtime 834 on the operating system 832, and containers 837 and 839 on the container runtime 834.

The third virtual machine 840 may be a virtual machine corresponding to ASIL C or ASIL D with the combination of severity, exposure, and controllability values being 9 or 10.

Meanwhile, ASIL D may correspond to a grade that requires the highest level of safety.

The third virtual machine 840 may execute a safety operating system 842 and an application 845 on the operating system 842.

Meanwhile, the third virtual machine 840 may also execute the safety operating system 842, a container runtime 844 on the safety operating system 842, and a container 847 on the container runtime 844.

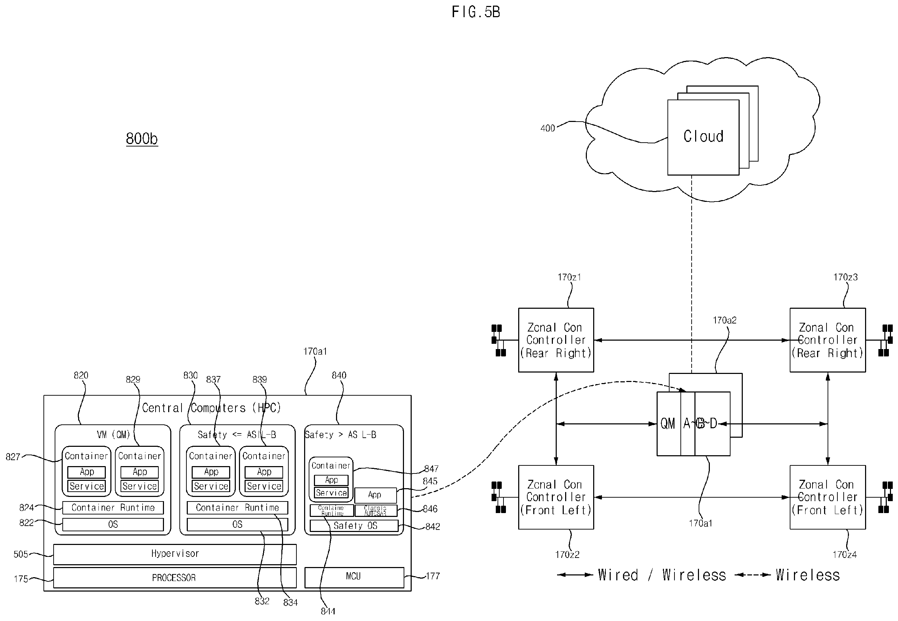

Meanwhile, unlike the drawing, the third virtual machine 840 may also be executed by a separate core, rather than by the processor 175, which will be described below with reference to FIG. 5B.

FIG. 5B is a diagram illustrating another example of a vehicle control device according to an embodiment of the present disclosure.

Referring to the figure, a vehicle control device 800b according to an embodiment of the present disclosure includes the signal processing devices 170a1 and 170a2.

Meanwhile, the vehicle control device 800b according to an embodiment of the present disclosure may further include a plurality of zonal signal processing devices 170Z1 to 170Z4.

The vehicle control device 800b of FIG. 5B is similar to the vehicle control device 800a of FIG. 5A, with a difference being that the signal processing device 170a1 of FIG. 5B is partially different from the signal processing device 170a1 of FIG. 5A.

The following description will focus on the difference, in which the signal processing device 170a may include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 may execute the operating system 822, the container runtime 824 on the operating system 822, and the containers 827 and 829 on the container runtime 824.

The second virtual machine 820 may execute the operating system 832, the container runtime 834 on the operating system 832, and the containers 837 and 839 on the container runtime 834.

Meanwhile, the second processor 177 in the signal processing device 170a1 may execute the third virtual machine 840.

The third virtual machine 840 may execute the safety operating system 842, an AUTOSAR 845 on the operating system 842, and an application 845 on the AUTOSAR 845. That is, unlike FIG. 5A, the third virtual machine 840 may further execute the AUTOSAR 846 on the operating system 842.

Meanwhile, similarly to FIG. 5A, the third virtual machine 840 may also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a may operate which is provided for backup purposes.

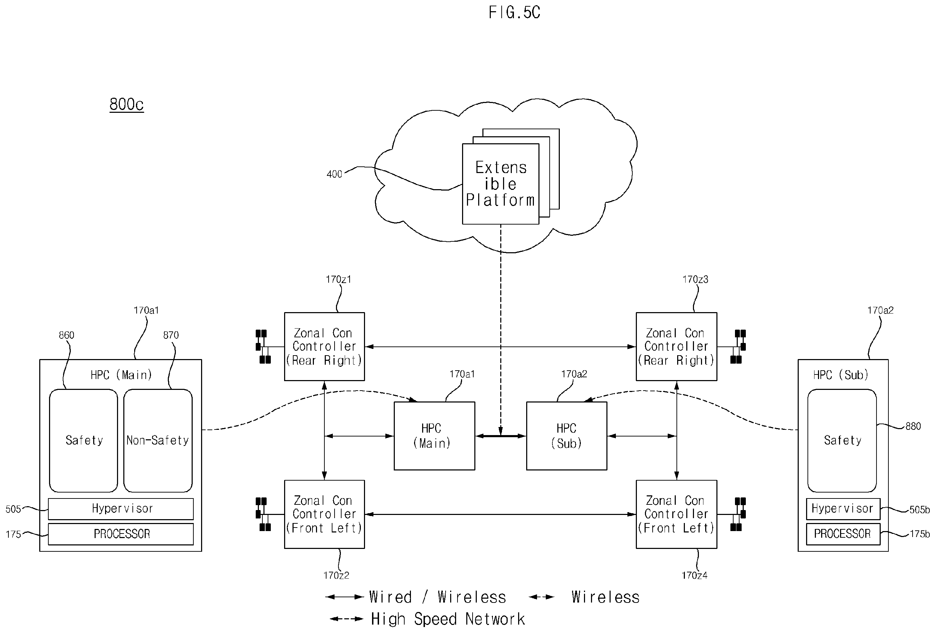

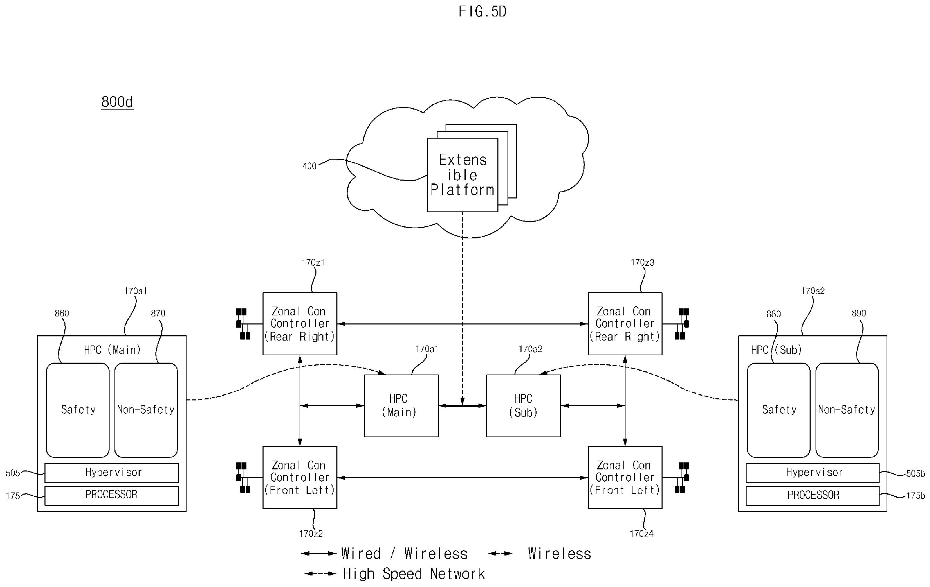

Unlike the example, the signal processing devices 170a1 and 170a2 may operate at the same time, among which the first signal processing device 170a may operate as a main device, and the second signal processing device 170a2 may operate as a sub device, which will be described below with reference to FIGS. 5C and 5D.

FIG. 5C is a diagram illustrating yet another example of a vehicle control device according to an embodiment of the present disclosure.

Referring to the figure, a vehicle control device 800c according to an embodiment of the present disclosure includes the signal processing devices 170a1 and 170a2.

Meanwhile, the vehicle control device 800c according to an embodiment of the present disclosure may further include a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 may be referred to as a High Performance Computing (HPC) signal processing devices.

The plurality of zonal signal processing devices 170Z1 to 170Z4 may be located in the respective zones Z1 to Z4 and may transmit sensor data to the signal processing devices 170a1 and 170a2.

The signal processing devices 170a1 and 170a2 may receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 exchange data with the communication device 120 based on wired communication.

Meanwhile, the data received by the signal processing devices 170a1 and 170a2 may include camera data or sensor data.

Meanwhile, the processor 175 in the first signal processing device 170a1 of the signal processing devices 170a1 and 170a2 may execute the hypervisor 505, and may execute each of a safety virtual machine 860 and a non safety virtual machine 870 on the hypervisor 505.

Meanwhile, the processor 175b in the second signal processing device 170a2 of the signal processing devices 170a1 and 170a2 may execute the hypervisor 505b, and may execute only a safety virtual machine 880 on the hypervisor 505.

In the method, safety and non safety virtual machines may be processed separately by the first signal processing device 170a1 and the second signal processing device 170a2, thereby improving stability and processing speed.

Meanwhile, high-speed network communication may be performed between the first signal processing device 170a1 and the second signal processing device 170a2.

FIG. 5D is a diagram illustrating yet another example of a vehicle control device according to an embodiment of the present disclosure.

Referring to the figure, a vehicle control device 800d according to an embodiment of the present disclosure includes the signal processing devices 170a1 and 170a2.

Meanwhile, the vehicle control device 800d according to an embodiment of the present disclosure may further include the plurality of zonal signal processing devices 170Z1 to 170Z4.

The vehicle control device 800d of FIG. 5D is similar to the vehicle control device 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D may execute the hypervisor 505b, and may execute each of a safety virtual machine 880 and a non safety virtual machine 890 on the hypervisor 505.

That is, unlike FIG. 5C, there is a difference in that the processor 175b in the second signal processing device 170a2 further executes the non safety virtual machine 890.

In the method, safety and non safety virtual machines may be processed separately by the first signal processing device 170a1 and the second signal processing device 170a2, thereby improving stability and processing speed.

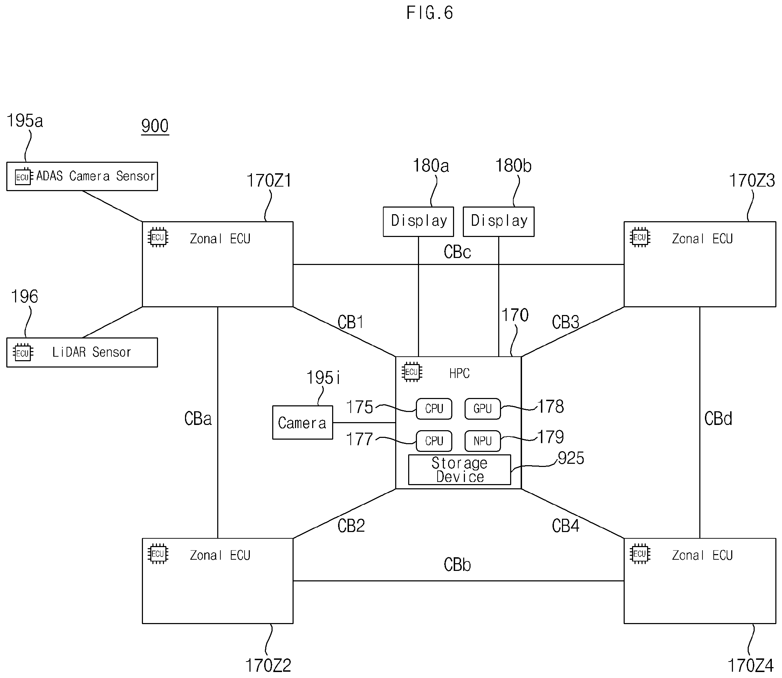

FIG. 6 is an exemplary block diagram of a vehicle control device according to an embodiment of the present disclosure.

Referring to the figure, a vehicle control device 900 according to an embodiment of the present disclosure includes the signal processing device 170.

The vehicle control device 900 according to an embodiment of the present disclosure may further include at least one display.

Meanwhile, the vehicle control device 900 according to an embodiment of the present disclosure may further include the steering driver 752, the brake driver 753, and the power source driver 754, the ECU 770, the plurality of sensor devices SN, or the like of FIG. 4.

Meanwhile, the vehicle control device 900 according to an embodiment of the present disclosure may further include the lamp driver 751, the suspension driver 756, the air conditioner driver 755, the window driver 758, and the seat driver 761, the plurality of communication modules EMa to EMd, or the like of FIG. 4.

In the drawing, the cluster display 180a and the AVN display 180b are illustrated as at least one display.

Meanwhile, the vehicle control device 900 may further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and may be referred to as a High Performance Computing (HPC) signal processing device or a central signal processing device.

The plurality of zonal signal processing devices 170Z1 to 170Z4 and the signal processing device 170 may be connected via wired cables CB1 to CB4.

Meanwhile, the plurality of zonal signal processing devices 170Z1 to 170Z4 may be connected via wired cables CBa to CBd.

In this case, the wired cables CBa to CBd may include CAN communication cable or Ethernet communication cable, or PCI Express cable.

Meanwhile, the signal processing device 170 according to an embodiment of the present disclosure may include at least one processor 175, 178, and 177, and a storage device 925 having a large capacity.

For example, the signal processing device 170 according to an embodiment of the present disclosure may include central processors 175 and 177, a graphic processor 178, and a neural processor 179.

Meanwhile, sensor data may be transmitted from at least one of the plurality of zonal signal processing devices 170Z1 to 170Z4 to the signal processing device 170. Particularly, the sensor data may be stored in the storage device 925 in the signal processing device 170.

In this case, the sensor data may include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure may perform multi path routing based on Software Defined Network (SDN). Accordingly, stable network environment for data write and read operations may be ensured. Further, data may be transmitted to the storage device 925 by using multiple paths, such that data may be transmitted by dynamically changing a network configuration.

It is desirable that data communication between the plurality of zonal signal processing devices 170Z1 to 170Z4 and the signal processing device 170 in the vehicle control device 900 according to an embodiment of the present disclosure is peripheral component interconnect express communication in order to provide high band and low delay communication.

Meanwhile, the signal processing device 170 according to an embodiment of the present disclosure may receive a vehicle internal image from an internal camera 195i, and may perform signal processing on the vehicle internal image.

Meanwhile, the signal processing device 170 according to an embodiment of the present disclosure may receive a front image from a front camera 195a, and may perform signal processing on the front image.

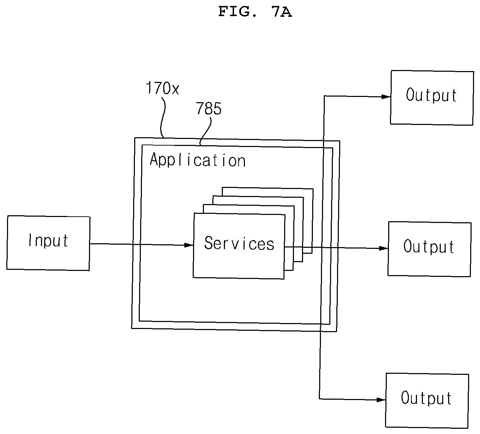

FIG. 7A is a diagram referred to in the description of a signal processing device related to the present disclosure.

Referring to the figure, a signal processing device 170x related to the present disclosure executes an application 785 based on sensor data or camera data and the like of a vehicle, and may output result data of the application 785 via multiple paths.

In the method, the result data of the application 785 is output after execution of the application 785 is completed, such that inefficiency occurs until execution of the application 785 is completed, thereby increasing the possibility that it takes a considerable amount of time.

Accordingly, the present disclosure proposes a scheme for sharing intermediate result data of an application during execution of the application.

To this end, the signal processing device 170 according to an embodiment of the present disclosure splits an application into a plurality of microservices, and executes different microservices based on results of microservices, thereby efficiently offloading workload.

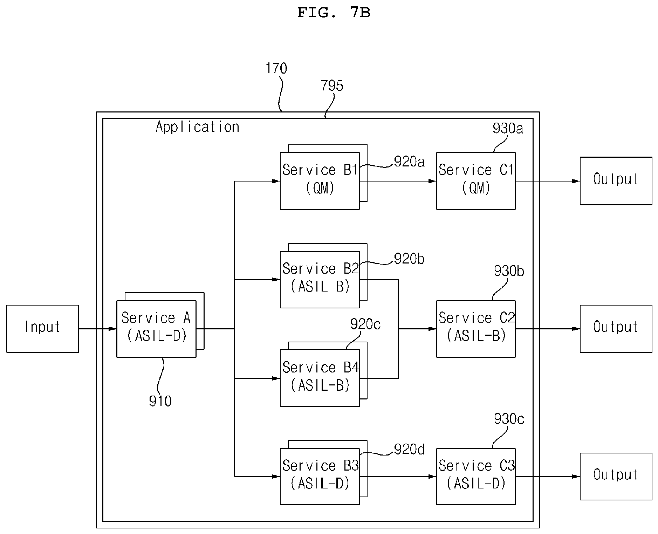

FIG. 7B is a diagram illustrating an example of executing a microservice according to an embodiment of the present disclosure.

Referring to the figure, the signal processing device 170 according to an embodiment of the present disclosure may execute an application 795 based on sensor data or camera data and the like of a vehicle.

In this case, the signal processing device 170 according to an embodiment of the present disclosure may separately execute the plurality of microservices for the application 795.

Meanwhile, the signal processing device 170 according to an embodiment of the present disclosure may separately execute an application or microservices for each safety level.

In this case, when a safety level of a transmission application or microservice is higher than or equal to a safety level of a reception application or microservice, the signal processing device 170 according to an embodiment of the present disclosure transmits result data of the transmission application or microservice.

Meanwhile, in the case in which the safety level of the transmission application or microservice is lower than or equal to the safety level of the reception application or microservice, the signal processing device 170 according to an embodiment of the present disclosure does not transmit result data of the transmission application or microservice.

In the drawing, a first microservice 910 corresponding to ASIL D which is a second safety level, is executed based on input data, and result data of the first microservice 910 corresponding to ASIL D may be transmitted to each of a second microservice 920a corresponding to QM which is a third safety level, a third microservice 920b corresponding to ASIL B which is a first safety level, a fourth microservice 920c corresponding to ASIL B which is the first safety level, and a fifth microservice 920d corresponding to ASIL D which is the third safety level.

As the safety level of the first microservice 910 is higher than the safety levels of the second microservice 920a, the third microservice 920b, and the fourth microservice 920c, such that result data of the first microservice 910 may be transmitted.

Meanwhile, as the safety level of the first microservice 910 is equal to the safety level of the fifth microservice 920d, such that result data of the first microservice 910 may be transmitted.

Then, a sixth microservice 930a corresponding to QM which is the third safety level is executed based on result data of the second microservice 920a, and result data thereof may be output via a first path.

Meanwhile, a seventh microservice 930b corresponding to ASIL B which is the first safety level is executed based on result data of the third microservice 920a and result data of the fourth microservice 920c, and result data thereof may be output via a second path.

Meanwhile, an eighth microservice 930c corresponding to ASIL D which is the second safety level is executed based on result data of the fifth microservice 920d, and result data thereof may be output via a third path.

As illustrated herein, in addition to outputting result data of the application 795 via multiple paths, corresponding microservices are executed via the respective paths in the signal processing device 170 unlike FIG. 7A, thereby efficiently offloading workload, and allowing efficient data processing.

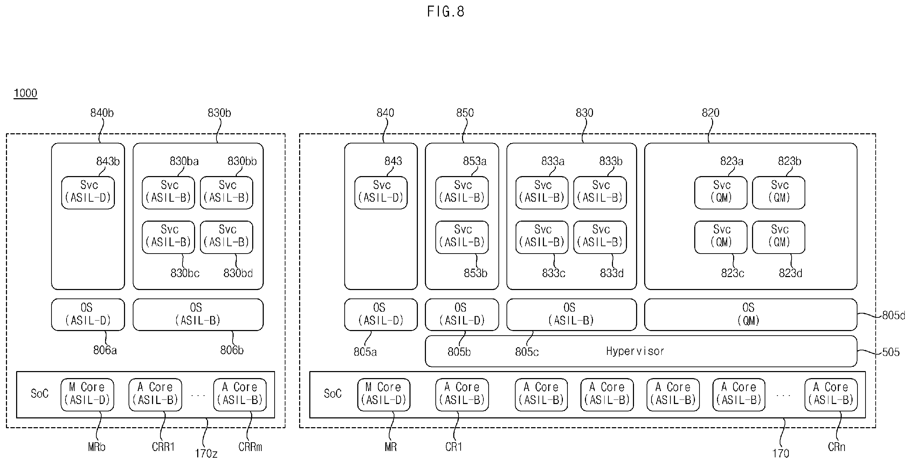

FIG. 8 is a diagram illustrating an example of a signal processing system according to an embodiment of the present disclosure.

Referring to the figure, a signal processing system 1000 according to an embodiment of the present disclosure may include a central signal processing device 170 and a zonal signal processing device 170z.

Meanwhile, the signal processing device 170 in the system 1000 according to an embodiment of the present disclosure includes a plurality of processor cores CR1 to CRn and MR.

Meanwhile, some processor cores CR1 to CRn among the plurality of processor cores CR1 to CRn and MR may correspond to processor cores in the central processor CPU of FIG. 6.

For example, some processor cores CR1 to CRn among the plurality of processor cores CR1 to CRn and MR may correspond to application processor cores in the central processor CPU of FIG. 6.

Meanwhile, some processor cores CR1 to CRn among the plurality of processor cores CR1 to CRn and MR may operate based on the hypervisor 505, and the hypervisor 505 may execute the plurality of virtual machines 820 to 850.

Meanwhile, another processor core MR among the plurality of processor cores CR1 to CRn and MR may correspond to M core or micom unit (MCU).

Meanwhile, another processor core MR among the plurality of processor cores CR1 to CRn and MR may execute an operating system 805a corresponding to the second safety level such as ASIL D, without executing the hypervisor 505, and may execute a fourth virtual machine 840 on the operating system 805a.

Meanwhile, the fourth virtual machine 840 may execute an application corresponding to the second safety level such as ASIL D or a microservice 843 corresponding to the application corresponding to the second safety level. Accordingly, the microservice 843 or the application corresponding to the second safety level may be stably executed.

Meanwhile, a first processor core CR1 among the plurality of processor cores CR1 to CRn and MR may execute the hypervisor 505, may execute the operating system 805b, corresponding to the second safety level such as ASIL D, on the hypervisor 505, and may execute the first virtual machine 850 on the operating system 805b.

Meanwhile, the first virtual machine 850 may execute an application corresponding to the first safety level such as ASIL B or microservices 853a and 853b corresponding to the application corresponding to the first safety level. Accordingly, the microservices 853a and 853b or the application corresponding to the first level safety may be stably executed.

Meanwhile, unlike the drawing, the first processor core CR1 among the plurality of processor cores CR1 to CRn and MR may execute an operating system, corresponding to the first safety level such as ASIL B, on the hypervisor 505.

Meanwhile, the second processor core CR2 and the third processor core CR3 among the plurality of processor cores CR1 to CRn and MR may execute the hypervisor 505, may execute the operating system 805c, corresponding to the first safety level such as ASIL B, on the hypervisor 505, and may execute the second virtual machine 850 on the operating system 805c.

Meanwhile, the second virtual machine 850 may execute a third application corresponding to the first safety level such as ASIL B or microservices 833a to 833d corresponding to the third application corresponding to the first safety level. Accordingly, the microservices 833a to 833d or the application corresponding to the first safety level may be stably executed.

Meanwhile, the remaining processor cores CR4 to CRn among the plurality of processor cores CR1 to CRn and MR may execute the hypervisor 505, may execute the operating system 805d, corresponding to the third safety level such as QM, on the hypervisor 505, and may execute the third virtual machine 820 on the operating system 805d.

Meanwhile, the third virtual machine 820 may execute a fourth application corresponding to the third safety level such as QM or microservices 823a to 823d corresponding to the fourth application corresponding to the third safety level, on the operating system 805d that corresponds to the third safety level lower than the first safety level. Accordingly, the microservices 823a to 823d or the application corresponding to the third safety level may be stably executed.

Meanwhile, the zonal signal processing device 170z may include a plurality of application processor cores CRR1 to CRRm, and an M-core MRb for executing an application corresponding to the second safety level, such as ASIL D, which is the highest level of safety.

Meanwhile, some processor cores RR1 to CRRm among the plurality of processor cores CRR1 to CRRm in the zonal signal processing device 170z may execute an operating system 806b corresponding to the first safety level such as ASIL B, and may execute the virtual machine 830b, corresponding to the first safety level, on the operating system 806a.

Meanwhile, the virtual machine 830b corresponding to the first safety level may execute the application corresponding to the first safety level such as ASIL B, or microservices 830ba to 830bd corresponding to the application corresponding to the first safety level. Accordingly, the microservices 830ba to 830bd or the application corresponding to the first safety level may be stably executed.

Meanwhile, another processor core MRb among the plurality of processor cores CRR1 to CRRm and MRb in the zonal signal processing device 170z may execute an operating system 806a corresponding to the second safety level such as ASIL D, and may execute the virtual machine 840b, corresponding to the second safety level such as ASIL D, on the operating system 806a.

Meanwhile, the virtual machine 840b corresponding to the second safety level may execute the application corresponding to the second safety level such as ASIL D, or a microservice 843b corresponding to the application corresponding to the second safety level. Accordingly, the microservice 843b or the application corresponding to the second safety level may be stably executed.

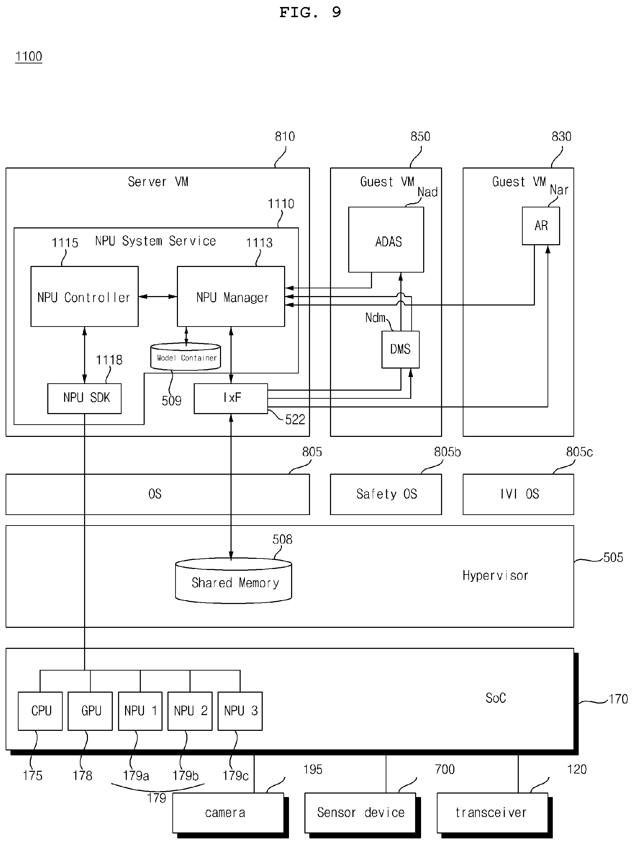

FIG. 9 is a diagram illustrating an example of a system driven in a signal processing device according to an embodiment of the present disclosure.

Referring to the figure, the signal processing device 170 in the signal processing system 1000 according to an embodiment of the present disclosure includes a central processor 175 and at least one neural processor 179a to 179c.

Meanwhile, the signal processing device 170 according to an embodiment of the present disclosure may further include a graphic processor 178.

Meanwhile, the central processor 175 according to an embodiment of the present disclosure executes the hypervisor 505.

Meanwhile, a system 1100 driven in the signal processing device 170 according to an embodiment of the present disclosure executes a plurality of virtual machines 810, 830, and 850 on the hypervisor 505.

Specifically, the central processor 175 in the signal processing device 170 according to an embodiment of the present disclosure executes the hypervisor 505, and executes the plurality of virtual machines 810, 830, and 850 on the hypervisor 505.

Meanwhile, the central processor 175 in the signal processing device 170 according to an embodiment of the present disclosure executes an application for vehicle driving.

Meanwhile, upon determining application operation failure, the central processor 175 controls a second application, corresponding to the application, to be executed in another central processor or another signal processing device, and changes a reference fallback guarantee time for the application operation failure based on an application safety level.

Accordingly, the application for vehicle driving may be stably executed. Particularly, the application for vehicle driving may be stably executed based on a safety level.

Meanwhile, the signal processing device 170 according to an embodiment of the present disclosure may further include a shared memory 508.

In the drawing, an example is illustrated in which the hypervisor 505 is executed in the central processor 175, and the shared memory 508 is executed in the hypervisor 505.

Meanwhile, the signal processing device 170 according to an embodiment of the present disclosure may receive data from the camera device 195, the sensor device 700, the communication device 120, or the lidar device 196, and may perform signal processing by using the central processor 175, the graphic processor 178, and at least one the plurality of neural processors 179a to 179c.

Meanwhile, the sensor device 700 may continuously output sensor data to the signal processing device 170 during operation of a vehicle.

In this case, the sensor data are data from various vehicle sensor devices 700, and may include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

Meanwhile, the camera device 195 may continuously output the camera data to the signal processing device 170 during vehicle operation.

Meanwhile, the lidar 196 may continuously output the lidar data to the signal processing device 170 during vehicle operation.

Meanwhile, the neural processor 179 may detect an object based on the camera data and may operate at a variable frame rate based on the object or may output result data including the object.

Meanwhile, the neural processor 179 may receive the camera at a fixed frame rate, may detect an object based on the camera data, and may operate at a variable frame rate based on the object or may output result data including the object.

Meanwhile, a first virtual machine 810, which is a server virtual machine, among the plurality of virtual machines 810, 830, and 850 may control operation of the neural processor 179.

Meanwhile, each of a second virtual machine 850 and a third virtual machine 830, which are guest virtual machines, among the plurality of virtual machines 810, 830, and 850 may execute an application.

In the drawing, an example is illustrated in which the second virtual machine 850 executes an ADAS application Nad or an autonomous driving application or a driver monitoring system (DMS) application Ndm, and the third virtual machine 830 executes an augmented reality (AR) application Nar.

While the first virtual machine 810 sequentially receives a request for a first operation, a request for a second operation, and a request for a third operation from a plurality of applications executed in at least one of the plurality of virtual machines 810, 830, and 850, if parallel processing of the first operation and the third operation may be performed, the first virtual machine 810 controls the first neural processor 179a to perform parallel processing of the first operation and the third operation, and to process the second operation after completing the first operation and the third operation. Accordingly, the neural processor may operate efficiently. Further, power consumption may be reduced.

Meanwhile, while the first virtual machine 810 receives a request for a fourth operation after receiving the request for the third operation, if the operation layers during the second operation and the fourth operation may be shared, the first virtual machine 810 controls the first neural processor 179a to continuously process the second operation and the fourth operation after completing the first operation and the third operation. Accordingly, the neural processor may operate efficiently.

Meanwhile, upon receiving a request for a plurality of operations from a plurality of applications, the first virtual machine 810 may change the arrangement of data about the plurality of operations in an internal memory 1805 of the first neural processor 179a. Accordingly, the neural processor may operate efficiently.

Meanwhile, the first virtual machine 810 may execute a neural system service 1110 to control at least one neural processor 179a to 179c.

Meanwhile, the upon receiving a request for a plurality of operations from a plurality of applications, the neural system service 1110 may change the arrangement of data about the plurality of operations in the internal memory 1805 of the first neural processor 179a. Accordingly, the neural processor may operate efficiently.

Meanwhile, the neural system service 1110 may execute or include a neural manager 113 for managing at least one neural processor 179a to 179c, a neural controller 1115 for controlling or determining an inference method of at least one neural processor 179a to 179c, and a neural interface 1118 for interfacing with at least one neural processor 179a to 179c.

Meanwhile, the neural system service 1110 may further execute or include a model container 509 for managing a model parameter interface related to operation of the neural processor 179, and versions of learning files.

The neural manager 113 may perform artificial intelligence (AI) model management, learning model management, camera data management, sensor data management, or command queue management.

The neural controller 1115 may determine an optimal inference method of at least one neural processor 179a to 179c, or may perform queuing, partitioning, caching, or scalable coding, or may control at least one neural processor 179a to 179c.

The neural interface 1118 may execute an application program interface (API) associated with an accelerator of at least one neural processor 179a to 179c.

Meanwhile, the interface 522 in the first virtual machine 810 may perform interfacing between the neural system service 1110 and the model container 509 or between the neural system service 1110 and the shared memory 508.

Meanwhile, the interface 522 in the first virtual machine 810 may perform interfacing for the first virtual machine 810.

Meanwhile, the interface 522 in the first virtual machine 810 may perform interfacing for the ADAS application Nad or the driver monitoring system (DMS) application Ndm which are executed in the second virtual machine 850, or the augmented reality (AR) application Nar executed in the third virtual machine 830.

For example, the interface 522 in the first virtual machine 810 may control the camera data or the second data or the sound data to be transmitted to the neural processor 179 by using the shared memory 508.

Meanwhile, the interface 522 in the first virtual machine 810 may control result data, output from the neural processor 179 and written to the shared memory 508, to be transmitted to the neural system service 1110.

Meanwhile, the interface 522 in the first virtual machine 810 may control the result data, output from the neural processor 179 and written to the shared memory 508, to be transmitted to the ADAS application Nad or the driver monitoring system (DMS) application Ndm which are executed in the second virtual machine 850, or the augmented reality (AR) application Nar executed in the third virtual machine 830.

Meanwhile, the first virtual machine 810 may be executed on the first operating system 805, the second virtual machine 850 may be executed on the second operating system 805b having a high level of safety, and the third virtual machine 830 may be executed on the third operating system 805c.

That is, the plurality of virtual machines 810, 830, and 850 may be executed on different operating systems or at least two operating systems.

Meanwhile, the second operating system 805b may be an operating system corresponding to the second safety level such as ASIL D, and the third operating system 805c may be an operating system corresponding to the first safety level such as ASIL B.

Meanwhile, the first operating system 805 may be an operating system corresponding to the second safety level such as ASIL D, but is not limited thereto, and may be an operating system corresponding to the first safety level such as ASIL B.

Meanwhile, the neural manager 113 may manage requirements for executing an artificial neural network-based application, may control neural network weight data, and may process required input data.

Meanwhile, the neural manager 1113 may sequentially process optimized command queues using a hardware accelerator, and may transmit an operation result to the application.

The requirements for executing the application may include operation priority, dependency, and accuracy of a neural network. The operation priority refers to a relationship in which the first operation is required to be always processed preferentially compared to the second operation, or if the neural network is a safety-critical neural network, the neural network is required to processed first before other candidate neural networks in the command queue are processed, and the operation priority is a predetermined value.

Meanwhile, the neural network weight data may refer to a stored file in which element values of each matrix are architected in the process of inferring results of a neural network calculated by performing a series of matrix operations.

The neural network weight data may be prestored in the model container 509 of the neural system service 1110 via an API call of the neural system service 1110 during an application installation process.

Meanwhile, base weight data loaded in the model container 509 may be automatically converted to various levels of discretization and stored during a system initialization process. For example, if the base weight is defined as FP32, the base weight may be sub-discretized to levels INT8, INT16, and FP16, such that a total of four weight files may be stored.

The required input data may refer to input signals, such as vehicle speed, current location, radar, lidar, camera image, and intermediate to final operation result values of a preceding neural network, etc., which are required for operation of a current neural network.

The input data may be transmitted in real time from the server virtual machine to the shared memory 509 in the hypervisor 505 through an interface implemented by the central processor 175.

The command queue is a memory buffer with a sequential, First In First Out (FIFO) data structure and may define a series of sequences for processing operations of an artificial neural network via a hardware accelerator.

One neural network operation request entering the command queue may be transmitted along with metadata, such as application name, location of an application virtual machine, storage destination for operation results, etc., hardware accelerator control setpoints, memory location of input data, and memory location information for each discretization level of weight data.

The hardware accelerator control setpoints may include a unique number of a hardware accelerator responsible for operations, current target discretization level (INT8, INT16, FP16, FP32, etc.) of weight data, and a mapping table in which a target neural network weight position is mapped to each address in an internal memory of the hardware accelerator.

Meanwhile, the neural controller 1115 may perform scheduling of an optimized command queue based on requested artificial neural network operation instructions and availability of current hardware resources, and may control an actual hardware accelerator according to expected operation of the command queue.

The neural controller 1115 may optimize the command queue by receiving requirements for neural network operation from the neural manager 1113.

In other words, the command queue may be optimized by checking priority, dependency, and accuracy metadata for each slot in the current command queue, and performing simulated scheduling of a combination of command queues in a direction that maximizes the use of hardware within a unit time and minimizes latency for individual operation requests, when various queue optimization methods (Partitioning, Caching, Accuracy Coding, etc.) are applied to all candidate commands in the current command queue.

A request for a weight file (learning model) may be sent to the neural manager 113 based on the optimal slot position obtained in this manner, and the weight file may be loaded into a hardware internal memory.

By using partitioning among the optimization methods, if two neural networks are managed as one virtual neural network and input in response to a hardware operation request, start and end positions of the weight of a first operation corresponding to an address number of the hardware internal memory may be recorded in the mapping table, followed by recording start and end positions of the weight of a second operation in the mapping table.

In this manner, the hardware accelerator performs parallel processing of one virtual neural network, but the neural controller 1115 separates the operation result into results of the first operation and the second operation through the mapping table, so as to separately transmit the operation results to individual applications.

After completing the above initialization process, the neural controller 1115 may receive a request for sequentially processing command queues from the neural manager 1113.

In this case, the neural controller 1115 may retrieve input data, prepared in advance by the neural manager 1113, from an input data queue to form a pair of a neural network weight and corresponding input data, so as to control operation processing to be performed through hardware accelerator API.

Unlike the initial operation requirements, in the case in which a discretization level of the current neural network is changed in specific circumstances, the neural controller 1115 may perform bitwise concatenation of a weight conversion difference value Delta of the hardware internal memory to a base weight of the current internal memory, thereby converting in real time a discretization level of the base weight of the internal memory.

Meanwhile, the central processor 175 executes an application for vehicle driving, and upon determining application operation failure, the central processor 175 controls another central processor 175 or another signal processing device 170 to execute a second application corresponding to the application, and changes a reference fallback guarantee time for the application operation failure based on an application safety level.

Meanwhile, the above fallback guarantee time may refer to a period from a fallback start point to a fallback end point.

Alternatively, the fallback guarantee time may refer to a period from a time point at which application operation failure or application failure is determined, to a fallback end point via a fallback start point.

Meanwhile, the safety level may refer to an Automotive Safety Integrity Level (ASIL) or an autonomous driving level, or a combination of the ASIL and autonomous driving level.

Accordingly, the application for vehicle driving may be stably executed. Particularly, the application for vehicle driving may be stably executed based on the safety level.

Meanwhile, if a safety level of an application is a first safety level corresponding thereto, the central processor 175 may set a reference fallback guarantee time to a first time, and if a safety level of an application is a second safety level higher than the first safety level, the central processor 175 may set the reference fallback guarantee time to a second time longer than the first time. Accordingly, the application for vehicle driving may be stably executed.

For example, the central processor 175 may set the reference fallback guarantee time to a first time of about 10 seconds for a first application corresponding to ASIL D in the case in which an autonomous driving level is a third level, and the central processor 175 may set the reference fallback guarantee time to a second time of about 30 seconds for a second application corresponding to ASIL D in the case in which an autonomous driving level is a fourth level. Accordingly, the application for vehicle driving may be stably executed based on the safety level.

In another example, the central processor 175 may set the reference fallback guarantee time to about 7 seconds for a third application corresponding to ASIL B in the case in which an autonomous driving level is a third level, and the central processor 175 may set the reference fallback guarantee time to about 10 seconds for a fourth application corresponding to ASIL D in the case in which an autonomous driving level is a third level. Accordingly, the application for vehicle driving may be stably executed based on the safety level.

In yet another example, in the case in which a safety level of an augmented reality (AR) application Nar is a first safety level corresponding to ASIL B, the central processor 175 may set the reference fallback guarantee time to the first time of about 10 seconds, and in the case in which a safety level of an ADAS application Nad is a second safety level corresponding to ASIL D higher than ASIL B, the central processor 175 may set the reference fallback guarantee time to the second time of about 30 seconds. Accordingly, the application for vehicle driving may be stably executed based on the safety level.

Meanwhile, in the case in which a safety level of an application is a third safety level lower than the first safety level, the central processor 175 may set the reference fallback guarantee time to a third time shorter than the first time. Accordingly, the application for vehicle driving may be stably executed based on the safety level.

For example, the central processor 175 may set the reference fallback guarantee time to about 1 second for a fifth application corresponding to ASIL D or ASIL B, in the case in which an autonomous driving level is a second level.

In another example, the central processor 175 may set the reference fallback guarantee time to about 0.7 seconds for a sixth application corresponding to QM, in the case in which an autonomous driving level is a second level.

In yet another example, in the case in which a safety level of an augmented reality (AR) application Nar is a third safety level corresponding to QM lower than ASIL B, the central processor 175 may set the reference fallback guarantee time to a third time of about 0.5 seconds. Accordingly, the application for vehicle driving may be stably executed based on the safety level.

Meanwhile, in the case in which the second virtual machine 850 among the plurality of virtual machines 810, 830, and 850 executes an application with a safety level higher than that of the third virtual machine 830, the central processor 175 may control a reference fallback guarantee time of an application executed in the second virtual machine 850 to be greater than a reference fallback guarantee time of an application executed in the third virtual machine.

For example, in the case in which the second virtual machine 850 executes a first application with an autonomous driving level being a fourth level, the central processor 175 may set the reference fallback guarantee time to about 30 seconds, and in the case in which the third virtual machine 830 executes a second application with an autonomous driving level being a third level, the central processor 175 may set the reference fallback guarantee time to about 10 seconds. Accordingly, the application for vehicle driving may be stably executed based on the safety level.

In another example, in the case in which the second virtual machine 850 executes an ADAS application Nad corresponding to ASIL D, the central processor 175 may set the reference fallback guarantee time of the ADAS application Nad to about 30 seconds, and in the case in which the third virtual machine 830 executes an augmented reality (AR) application Nar corresponding to ASIL B, the central processor 175 may set the reference fallback guarantee time of the AR application Nar to about 10 seconds. Accordingly, the application for vehicle driving may be stably executed based on the safety level.

FIGS. 10A to 10C are diagrams referred to in the description of operation of a vehicle control device associated with the present disclosure.

FIG. 10A is a diagram illustrating an example of vehicle driving based on a lane keeping mode.

Particularly, FIG. 10A is a diagram illustrating an example in which a vehicle 200 travels between a first line LNa and a second line LNb, and a large truck OBm travels in a lane next to the vehicle 200.

Referring to FIG. 10A, the vehicle control device associated with the present disclosure may detect the lines LNa and LNb based on an image from a camera, and may control a first distance DPa from the center of both lines LNa and LNb or the first line LNa to be maintained constant when the lane keeping mode is performed.

In the case in which the vehicle 200 is located in the center of both lines LNa and LNb, a distance between the center of the vehicle 200 and the first line LNa may be DPm.

Meanwhile, in the case in which the lane keeping mode is performed while the large truck OBm travels in a next lane between the second line LNb and a third line LNc, the vehicle control device associated with the present disclosure controls the first distance from the center of both lines LNa and LNb or the first line LNa to be maintained constant.

However, if the vehicle-to-lane line distance is maintained constant in the lane keeping mode, a driver feels uneasy due to the large truck OBm.

FIG. 10B is a diagram illustrating another example of vehicle driving based on a lane keeping mode.

Particularly, FIG. 10B illustrates an example in which the vehicle 200 travels between the first line LNa and the second line LNb based on the lane keeping mode, and a road border or a guardrail RBm is located next to the first line LNa.

Referring to FIG. 10B, in the case in which the lane keeping mode is performed when the road border or the guardrail RBm is located next to the first line LNa, the vehicle control device associated with the present disclosure controls a first distance from the center of both lines LNa and LNb or the first line LNa to be maintained constant.

However, if the vehicle-to-line distance is maintained constant in the lane keeping mode, a driver feels uneasy due to the road border or the guardrail RBm.

FIG. 10C is a diagram illustrating yet another example of vehicle driving based on a lane keeping mode.

Particularly, FIG. 10C illustrates an example in which the vehicle 200 travels between the first line LNa and the second line LNb based on the lane keeping mode, and an emergency vehicle 200f approaches behind the vehicle 200.

Specifically, it is illustrated that a plurality of vehicles 200mb, 200mc, and 200md travel behind the vehicle 200, and the emergency vehicle 200f is located between the vehicle 200 and the plurality of vehicles 200mb, 200mc, and 200md.

The traveling direction of the plurality of vehicles 200mb, 200mc, and 200md may be adjusted so that an inter-vehicle distance may increase for traveling of the emergency vehicle 200f.

Meanwhile, in the case in which the lane keeping mode is performed while the emergency vehicle 200f approaches behind the vehicle 200, the vehicle control device associated with the present disclosure controls a first distance from the center of both lines LNa and LNb or the first line LNa to be maintained constant.

However, if the vehicle-to-lane line distance is maintained constant in the lane keeping mode, there is inconvenience in that the distance may not be adjusted for the emergency vehicle 200f.

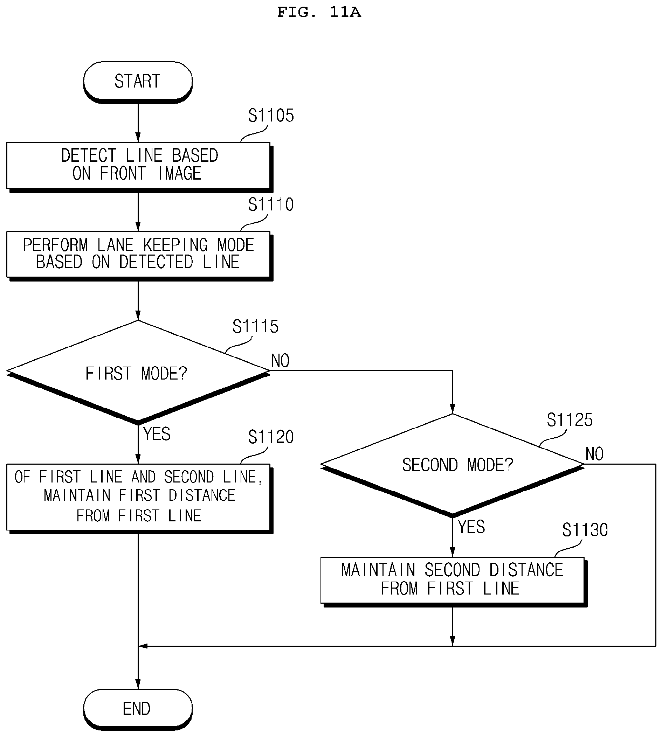

Accordingly, the present disclosure proposes a method of subdividing the lane keeping mode, so that while the vehicle-to-lane line distance is maintained constant in a first mode of the lane keeping mode, the vehicle-to-lane line distance may be adjusted adaptively in a second mode of the lane keeping mode by considering vehicle driving situations or conditions of a driver, etc., which will be described below with reference to FIG. 11A and subsequent figures.

FIG. 11A is a flowchart illustrating a method of operating a signal processing device according to an embodiment of the present disclosure.

Referring to FIG. 11A, the processor 175 in the signal processing device 170 according to an embodiment of the present disclosure receives a front image from a front camera 195a, and detects lines based on the front image (S1105).

Meanwhile, the processor 175 may detect lines based further on a side image, map information from the memory 140, and position information, such as GPS and the like, from the transceiver 120 in addition to the front image from the front camera 195a.

Meanwhile, the processor 175 may detect various objects, such as surrounding vehicles, road signs, pedestrians, traffic lights, a road border, etc., in addition to the lines based on the front image from the front camera 195a or the side image.

Meanwhile, the processor 175 may detect various objects, such as surrounding vehicles, road signs, pedestrians, traffic lights, a road border, etc., based further on the map information from the memory 140 and position information, such as GPS and the like, from the transceiver 120 in addition to the front image from the front camera 195a or the side image.

Then, the processor 175 in the signal processing device 170 according to an embodiment of the present disclosure may perform the lane keeping mode based on the detected lines (S1110).

Meanwhile, the processor 175 in the signal processing device 170 may determine whether the lane keeping mode is the first mode (S1115), and if so, the processor 175 may perform the first mode of the lane keeping mode.

That is, the processor 175 in the signal processing device 170 may perform the lane keeping mode based on the detected lines, and the processor 175 may control the steering driver 752 to maintain a first distance DPa from the first line LNa, of the first line LNa and second line LNa that are adjacent to each other, in the first mode of the lane keeping mode (S1120).

Meanwhile, if the lane keeping mode is not the first mode in operation 1115 (S1115), the processor 175 in the signal processing device 170 may determine whether the lane keeping mode is the second mode (S1125), and if so, the processor 175 performs the second mode of the lane keeping mode.

That is, the processor 175 in the signal processing device 170 may perform the lane keeping mode based on the detected lines, and may control the steering driver 752 to maintain a second distance DPb from the first line LNa in the second mode of the lane keeping mode, the second distance being different from the first distance (S1130).

Accordingly, the vehicle-to-lane line distance may be adjusted adaptively by reflecting a driving situation during operation in the lane keeping mode.

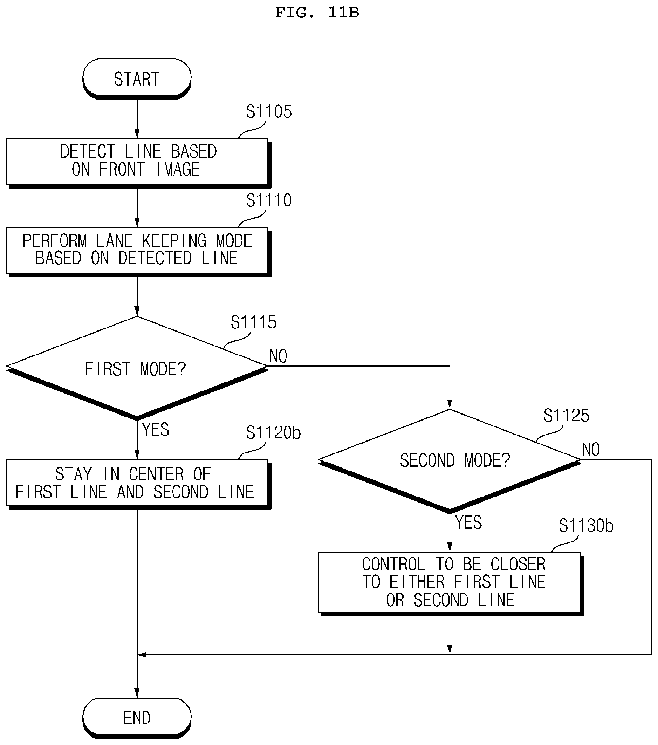

FIG. 11B is a flowchart illustrating a method of operating a signal processing device according to another embodiment of the present disclosure.

Referring to FIG. 11B, the processor 175 in the signal processing device 170 according to an embodiment of the present disclosure receives a front image from a front camera 195a, and detects lines based on the front image (S1105).

Then, the processor 175 in the signal processing device 170 may perform the lane keeping mode based on the detected lines (S1110).

Meanwhile, the processor 175 in the signal processing device 170 may determine whether the lane keeping mode is the first mode (S1115), and if so, the processor 175 may perform the first mode of the lane keeping mode.

That is, the processor 175 in the signal processing device 170 may perform the lane keeping mode based on the detected lines, and may control the steering driver 752 to stay in the center of the first line LNa and second line LNa in the first mode of the lane keeping mode (S1120b).

Meanwhile, if the lane keeping mode is not the first mode in operation 1115 (S1115), the processor 175 in the signal processing device 170 may determine whether the lane keeping mode is the second mode (S1125), and if so, the processor 175 performs the second mode of the lane keeping mode.

That is, the processor 175 in the signal processing device 170 may perform the lane keeping mode based on the detected lines, and may control the steering driver 752 to be closer to either the first line LNa or the second line LNb in the second mode of the lane keeping mode (S1130b).

Accordingly, the vehicle-to-line distance may be adjusted adaptively by reflecting a driving situation during operation in the lane keeping mode.

Meanwhile, the processor 175 in the signal processing device 170 may control the steering driver 752 to maintain the first distance DPa from the first line LNa in the first mode of the lane keeping mode, so as to stay in the center of the first line LNa and the second line LNb that are adjacent to each other.

Meanwhile, the processor 175 in the signal processing device 170 may control the steering driver 752 to maintain a second distance DPb from the first line LNa in the first mode of the lane keeping mode, so as to be closer to either the first line LNa or the second line LNb. In this case, the second distance DPb is desirably different from the first distance DPa.

Accordingly, the vehicle-to-lane line distance may be adjusted adaptively by reflecting a driving situation during operation in the lane keeping mode.

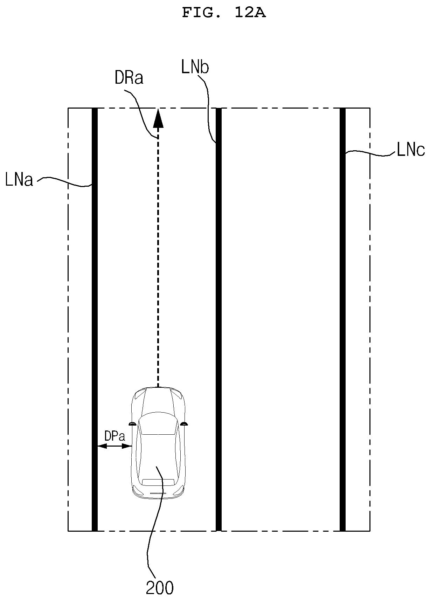

FIGS. 12A to 18 are diagrams referred to in the description of operation of FIGS. 11A and 11B.

First, FIG. 12A is a diagram illustrating an example of a first mode of a lane keeping mode.

Referring to FIG. 12A, the processor 175 in the signal processing device 170 according to an embodiment of the present disclosure detects lines based on a front image from the camera 195 and performs the lane keeping mode based on the detected lines.

Particularly, the processor 175 in the signal processing device 170 according to an embodiment of the present disclosure controls the steering driver 752 to maintain a first distance DPa from the first line LNa, of the first line LNa and the second line LNb which are adjacent to each other, in the first mode of the lane keeping mode.

Alternatively, the processor 175 in the signal processing device 170 according to another embodiment of the present disclosure controls the steering driver 752 to stay in the center of the first line LNa and the second line LNb which are adjacent to each other, in the first mode of the lane keeping mode.

Accordingly, the vehicle 200 travels in a direction DRa in which the vehicle 200 stays in the center of the first line LNa and the second line LNb which are adjacent to each other.

Meanwhile, if no adjacent vehicle, road border or guardrail RBm, or emergency vehicle 200f exists around the vehicle 200 based on the front image, the side image, or the rear image from the camera 195, the processor 175 in the signal processing device 170 according to an embodiment of the present disclosure may perform the first mode of the lane keeping mode.

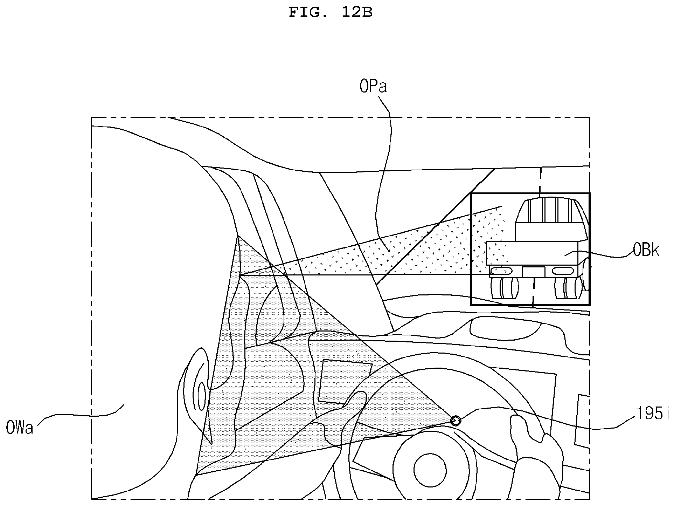

FIG. 12B is a diagram illustrating an example in which attention of a driver is directed at the preceding vehicle OBk.

Referring to FIG. 12B, the processor 175 in the signal processing device 170 may detect a face direction or attention direction of the driver OWa based on a vehicle internal image from the internal camera 195i.

Meanwhile, as illustrated in FIG. 12B, the processor 175 in the signal processing device 170 may set a forward attention level to a first level in the case in which an attention direction OPa of the driver OWa is oriented toward the preceding vehicle OBk.

Meanwhile, in the case in which the attention direction OPa of the driver OWa is oriented toward the preceding vehicle OBk or in the case in which the forward attention level is the first level greater than or equal to a reference level, the processor 175 in the signal processing device 170 may perform the first mode of the lane keeping mode. Accordingly, the first mode of the lane keeping mode may be performed as illustrated in FIG. 12A.

Meanwhile, unlike FIG. 12B, in the case in which the attention direction OPa of the driver OWa is not oriented toward the preceding vehicle OBk but toward the sides of the vehicle and the like, the processor 175 in the signal processing device 170 may set the forward attention level to a second level lower than the first level.

Meanwhile, in the case in which the attention direction OPa of the driver OWa is not oriented toward the preceding vehicle OBk or in the case in which the forward attention level is the second level lower than the reference level, the processor 175 in the signal processing device 170 may perform the second mode of the lane keeping mode.

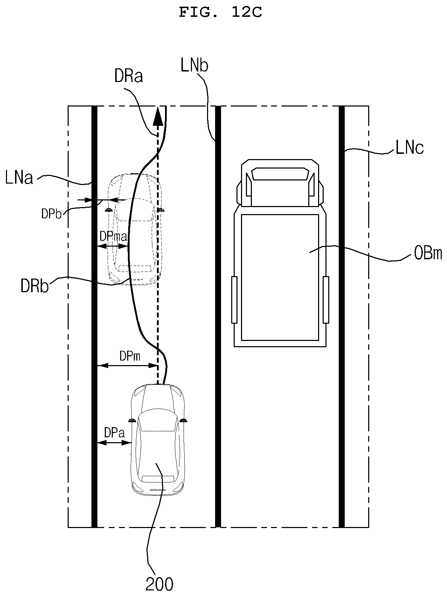

Next, FIG. 12C is a diagram illustrating an example of a second mode of the lane keeping mode.

Referring to FIG. 12C, the processor 175 in the signal processing device 170 according to an embodiment of the present disclosure detects lines based on a front image from the camera 195 and performs the lane keeping mode based on the detected lines.

Meanwhile, the processor 175 in the signal processing device 170 according to an embodiment of the present disclosure may detect a surrounding vehicle object based on the front image or side image from the camera 195.

For example, the processor 175 in the signal processing device 170 according to an embodiment of the present disclosure may perform the second mode of the lane keeping mode in the case in which a second vehicle OBm is located in an adjacent lane as illustrated herein.

In another example, the processor 175 in the signal processing device 170 according to an embodiment of the present disclosure may perform the second mode of the lane keeping mode in the case in which the second vehicle OBm is located in an adjacent lane and the size of the second vehicle OBm is greater than or equal to a reference size.

In yet another example, the processor 175 in the signal processing device 170 according to an embodiment of the present disclosure may perform the second mode of the lane keeping mode in the case in which the second vehicle OBm is located in an adjacent lane and the attention direction OPa of the driver OWa is oriented toward the second vehicle OBm.

In further another example, the processor 175 in the signal processing device 170 according to an embodiment of the present disclosure may perform the second mode of the lane keeping mode in the case in which the second vehicle OBm is located in an adjacent lane, the attention direction OPa of the driver OWa is oriented toward the second vehicle OBm, and the emotion of the driver OWa is surprise or fear.

Meanwhile, the processor 175 in the signal processing device 170 according to an embodiment of the present disclosure controls the steering driver 752 to maintain the second distance DPb from the first line LNa, of the first line LNa and second line LNb that are adjacent to each other, in the second mode of the lane keeping mode, the second distance DPb being smaller than the first distance DPa. Accordingly, the vehicle-to-lane line distance may be adjusted adaptively by reflecting a driving situation during operation in the lane keeping mode.

Alternatively, the processor 175 in the signal processing device 170 according to another embodiment of the present disclosure controls the steering driver 752 to be closer to the first line LNa, of the first line LNa and second line LNb that are adjacent to each other, in the second mode of the lane keeping mode.

That is, the processor 175 in the signal processing device 170 according to another embodiment of the present disclosure may control a distance between the center of the vehicle 200 and the first line LNa to be DPma, smaller than DPm, in the second mode of the lane keeping mode.

Specifically, in the case in which the second vehicle OBm is located on one side, the processor 175 in the signal processing device 170 may control the vehicle 200 to move partly to another side, which is an opposite side of the one side, while staying in the lane in which the vehicle travels, by considering the attention direction OPa and emotional state of the driver OWa and the like.

As a result, the processor 175 in the signal processing device 170 may control a traveling direction of the vehicle to be DRb, rather than DRa, in the second mode of the lane keeping mode. Accordingly, the vehicle-to-lane line distance may be adjusted adaptively by reflecting a driving situation during operation in the lane keeping mode.

Meanwhile, the processor 175 in the signal processing device 170 may detect the second object OBm located on the side of the vehicle based on the side image or the front image from the camera 195, and may change the second distance DPb in the second mode of the lane keeping mode based on the size of the second vehicle OBm.

For example, the processor 175 may decrease the second distance DPb as the size of the second vehicle OBm increases or may decrease DPma so that the vehicle 200 may be closer to the first line LNa. Accordingly, the vehicle-to-lane line distance may be adjusted adaptively based on the size of the second vehicle OBm.

Meanwhile, the processor 175 may change the second distance DPb based on a speed of the vehicle 200 in the second mode of the lane keeping mode.

For example, as the speed of the vehicle 200 increases, the processor 175 may decrease the second distance DPb or may control the vehicle 200 to be closer to the first line LNa. Accordingly, the vehicle-to-lane line distance may be adjusted adaptively based on the speed of the vehicle 200.

Meanwhile, the processor 175 may change the second distance DPb in the second mode of the lane keeping mode based on driving proficiency of the driver OWa or the number of occupants in the vehicle 200 or whether the passenger seat is occupied.

For example, as the driving proficiency of the driver OWa decreases or as the number of occupants in the vehicle 200 increases, the processor 175 may decrease the second distance DPb or may control the vehicle 200 to be closer to the first line LNa. Accordingly, the vehicle-to-line distance may be adjusted adaptively based on the driving proficiency or the number of occupants.

In another example, the processor 175 may control the second distance DPb to become smaller or may control the vehicle 200 to be closer to the first line LNa in the case in which the passenger seat is occupied than in the case in which the passenger seat is not occupied. Accordingly, the vehicle-to-lane line distance may be adjusted adaptively based on whether the passenger seat is occupied.

Meanwhile, in response to performing the second mode of the lane keeping mode, the processor 175 in the signal processing device 170 may detect pedestrians on the side of the vehicle based on the side image or the front image from the camera 195, and may change the second distance DPb based on the number or position of pedestrians.

For example, as the number of pedestrians adjacent to the second line LNb, of the first line LNa and the second line LNb, increases or as the distance between the vehicle 200 and the second line LNb decreases, the processor 175 in the signal processing device 170 may decrease the second distance DPb or may control the vehicle 200 to be closer to the first line LNa. Accordingly, the vehicle-to-line distance may be adjusted adaptively based on the detected pedestrians.

Meanwhile, the processor 175 may detect attention of the driver OWa based on a vehicle internal image from the internal camera 195i, and may change the second distance DPb in the second mode of the lane keeping mode based on the attention direction of the driver OWa.

For example, as the attention direction of the driver OWa moves away from the preceding vehicle OBk in FIG. 12B, the processor 175 in the signal processing device 170 may decrease the second distance DPb or may control the vehicle 200 to be closer to the first line LNa. Accordingly, the vehicle-to-line distance may be adjusted adaptively based on the attention direction of the driver OWa.

Meanwhile, in a manual driving mode instead of the lane keeping mode, the processor 175 may detect attention of the driver OWa based on the vehicle internal image from the internal camera 195i and detect a distance to the first line LNa in the front image, and may perform learning based on a distance between the attention of the driver OWa and the first line LNa, and may store a result of the learning in the memory 140.

Meanwhile, the processor 175 may set the second distance DPb based on the learning result while performing the second mode of the lane keeping mode.

For example, in the manual driving mode, if a forward attention level of the driver OWa is a first level and a distance to the first line LNa is smaller than DPa, the processor 175 may determine, by learning, a driving pattern of the driver OWa to be a first driving pattern in which the vehicle 200 is closer to the first line LNa, of the first line LNa and the second line LNb.

Meanwhile, in response to performing the second mode of the lane keeping mode, the processor 175 may set the second distance DPb based on the first driving pattern determined as a result of the learning.

In another example, in the manual driving mode, if the forward attention level of the driver OWa is a second level lower than the first level and a distance to the first line LNa is smaller than DPa, the processor 175 may determine, by learning, a driving pattern of the driver OWa to be a second driving pattern in which the vehicle 200 is closer to the first line LNa, of the first line LNa and the second line LNb.

Meanwhile, in response to performing the second mode of the lane keeping mode, the processor 175 may set a second distance to be smaller than that of the first driving pattern, based on the second driving pattern determined as a result of the learning. Accordingly, the vehicle-to-lane line distance may be adjusted adaptively based on learning.

In yet another example, in the manual driving mode, if the forward attention level of the driver OWa is the first level and a distance to the first line LNa is smaller than DPa and that of the first driving pattern, the processor 175 may determine, by learning, a driving pattern of the driver OWa to be a third driving pattern in which the vehicle 200 is closer to the first line LNa, of the first line LNa and the second line LNb.

Meanwhile, in response to performing the second mode of the lane keeping mode, the processor 175 may set a second distance to be smaller than that of the first driving pattern, based on the third driving pattern determined as a result of the learning. Accordingly, the vehicle-to-line distance may be adjusted adaptively based on learning.

Meanwhile, in the manual driving mode, the processor 175 may detect emotion information of the driver OWa based on the vehicle internal image from the internal camera 195i, may detect a distance to the first line LNa in the front image, may perform learning based on the emotion information of the driver OWa and the distance to the first line LNa, and may store a result of the learning in the memory. Accordingly, the vehicle-to-lane line distance may be adjusted adaptively based on the emotion information of the driver OWa.

For example, in the manual driving mode, the processor 175 may detect the emotion information of the driver OWa based on pupil movement or face movement of the driver OWa when a second vehicle is located next to the vehicle 200.

Meanwhile, in the manual driving mode, in the case in which a level of fear as the emotion information of the driver OWa is a first level when a second vehicle is located next to the vehicle 200 and a distance to the first line LNa is smaller than DPa, the processor 175 may determine, by learning, a driving pattern of the driver OWa to be the first driving pattern in which the vehicle 200 is closer to the first line LNa, of the first line LNa and the second line LNb.

Meanwhile, in response to performing the second mode of the lane keeping mode, the processor 175 may set the second distance DPb based on the first driving pattern determined as a result of the learning.

In another example, in the manual driving mode, in the case in which the level of fear as the emotion information of the driver OWa is the first level when the second vehicle is located next to the vehicle 200 and the distance to the first line LNa is smaller than DPa, the processor 175 may determine, by learning, a driving pattern of the driver OWa to be a second driving pattern in which the vehicle 200 is closer to the first line LNa, of the first line LNa and the second line LNb.

Meanwhile, in response to performing the second mode of the lane keeping mode, the processor 175 may set a second distance to be smaller than that of the first driving pattern, based on the second driving pattern determined as a result of the learning. Accordingly, the vehicle-to-line distance may be adjusted adaptively based on learning.

In yet another example, in the manual driving mode, in the case in which the level of fear as the emotion information of the driver OWa is the first level when the second vehicle is located next to the vehicle 200 and the distance to the first line LNa is smaller than DPa and that of the first driving pattern, the processor 175 may determine, by learning, a driving pattern of the driver OWa to be a third driving pattern in which the vehicle 200 is closer to the first line LNa, of the first line LNa and the second line LNb.

Meanwhile, in response to performing the second mode of the lane keeping mode, the processor 175 may set a second distance to be smaller than that of the first driving pattern, based on the third driving pattern determined as a result of the learning. Accordingly, the vehicle-to-line distance may be adjusted adaptively based on learning.

Meanwhile, in the manual driving mode, the processor 175 may detect the attention direction of the driver OWa and the emotion information of the driver OWa based on the vehicle internal image from the internal camera 195i, may detect a distance to the first line LNa in the front image, may perform learning based on the attention direction of the driver OWa, the emotion information of the driver OWa, and the distance to the first line LNa, and may store a result of the learning in the memory. Accordingly, the vehicle-to-line distance may be adjusted adaptively based on the attention direction and emotion information of the driver OWa.

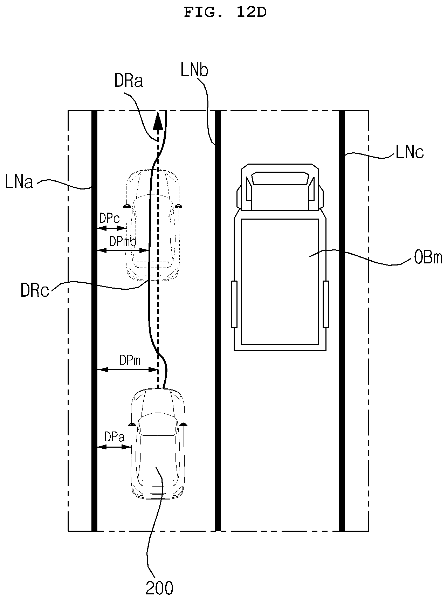

Then, FIG. 12D is a diagram illustrating another example of the second mode of the lane keeping mode.

Referring to FIG. 12D, the processor 175 in the signal processing device 170 according to an embodiment of the present disclosure may perform the second mode of the lane keeping mode when a second vehicle OBm is located in an adjacent lane as illustrated herein.

Meanwhile, compared to FIG. 12C, the processor 175 may control a second distance to the first line LNa to be DPc that is greater than DPb or may control a distance between the center of the vehicle 200 and the first line LNa to be DPmb that is greater than DPma, as the speed of the vehicle 200 decreases, or as driving proficiency of the driver OWa increases, or as the number of pedestrians in the vehicle 200 decreases, or as the number of pedestrians adjacent to the second line LNb decreases.

In this case, it is desirable that DPc is smaller than DPa, and DPmb is smaller than DPm. Accordingly, the vehicle-to-line distance may be adjusted adaptively by reflecting a driving situation during operation in the lane keeping mode.

As a result, in response to performing the second mode of the lane keeping mode, the processor 175 in the signal processing device 170 according to an embodiment of the present disclosure may control a traveling direction of the vehicle to be DRc rather than DRa.

Meanwhile, in the case in which a road border or a guardrail RBm or a second vehicle having a size greater than or equal to a reference size is located next to the vehicle 200 based on the side image or the front image from the camera 195, the processor 175 in the signal processing device 170 according to an embodiment of the present disclosure may perform the second mode of the lane keeping mode.

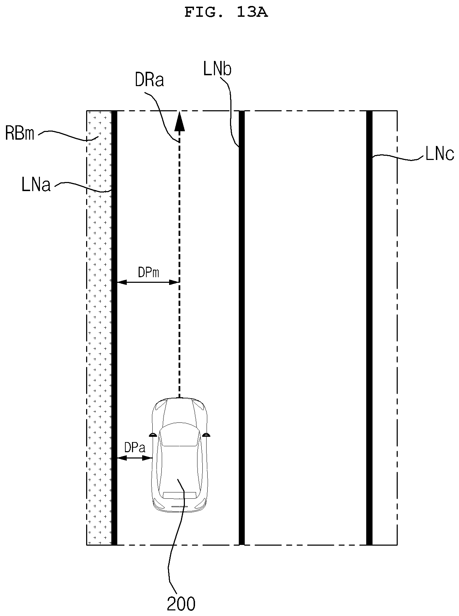

The second mode of the lane keeping mode related to the road border or the guardrail RBm will be described below with reference to FIGS. 13A to 13D.

FIG. 13A is a diagram illustrating an example of a first mode of a lane keeping mode.

Referring to FIG. 13A, if no adjacent vehicle, road border or guard rail RBm, or emergency vehicle 200f exists around the vehicle 200 based on the front image, the side image, or the rear image from the camera 195, the processor 175 in the signal processing device 170 according to an embodiment of the present disclosure may perform the first mode of the lane keeping mode.

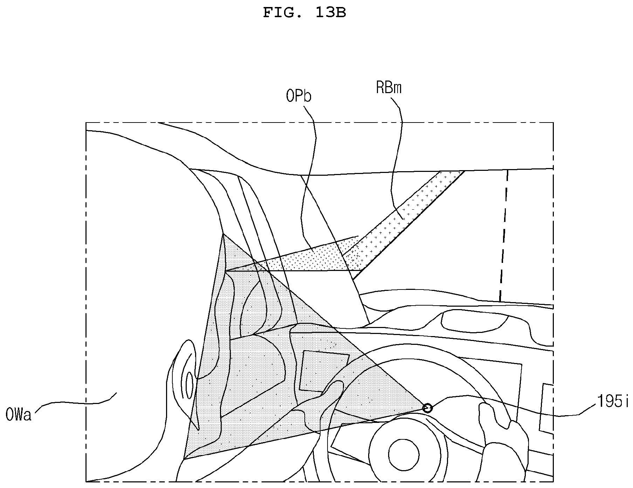

FIG. 13B is a diagram illustrating an example in which attention of a driver is directed at the road border or the guardrail RBm.

Referring to FIG. 13B, the processor 175 in the signal processing device 170 may detect a face direction or attention direction of the driver OWa based on a vehicle internal image from the internal camera 195i.

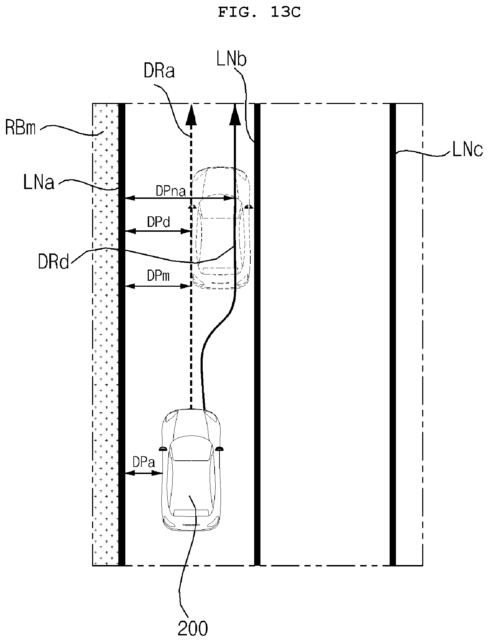

Meanwhile, as illustrated in FIG. 13B, the processor 175 in the signal processing device 170 may perform the second mode of the lane keeping mode in the case in which an attention direction OPb of the driver OWa is oriented toward the road border or the guardrail RBm. Accordingly, the second mode of the lane keeping mode may be performed as illustrated in FIG. 13C.

Meanwhile, as illustrated in FIG. 13B, the processor 175 in the signal processing device 170 may perform the second mode of the lane keeping mode in the case in which the attention direction OPb of the driver OWa is oriented toward the road border or the guardrail RBm and emotion of the driver OWa is surprise or fear.

Specifically, in the case in which the road border or the guardrail RBm is located on one side, the processor 175 in the signal processing device 170 may control the vehicle 200 to move partly to another side, which is an opposite side of the one side, while staying in the lane in which the vehicle travels, by considering the attention direction OPa and emotional state of the driver OWa and the like.

The, FIG. 13C is a diagram illustrating yet another example of the second mode of the lane keeping mode.

Referring to FIG. 13C, the processor 175 in the signal processing device 170 detects lines based on the front image from the camera 195 and performs the lane keeping mode based on the detected lines.

Meanwhile, the processor 175 in the signal processing device 170 according to an embodiment of the present disclosure may detect a surrounding vehicle object based on the front image or side image from the camera 195.

For example, the processor 175 in the signal processing device 170 according to an embodiment of the present disclosure may perform the second mode of the lane keeping mode in the case in which the road border or the guardrail RBm is located next to the vehicle, as illustrated herein.

Specifically, the processor 175 may control the vehicle 200 to be closer to the first lane LNa in the case in which the road border or the guardrail RBm is located adjacent to the first line LNa, of the first line LNa and the second line LNb.

That is, the processor 175 may control a second distance to the first line LNa to be DPd greater than DPa or may control a distance between the center of the vehicle 200 and the first line LNa to be DPna greater than DPm in the case in which the road border or the guardrail RBm is located adjacent to the first line LNa, of the first line LNa and the second line LNb. Accordingly, the vehicle-to-lane line distance may be adjusted adaptively by reflecting a driving situation during operation in the lane keeping mode.

As a result, in response to performing the second mode of the lane keeping mode, the processor 175 in the signal processing device 170 according to an embodiment of the present disclosure may control a traveling direction of the vehicle to be DRd, rather than DRa.

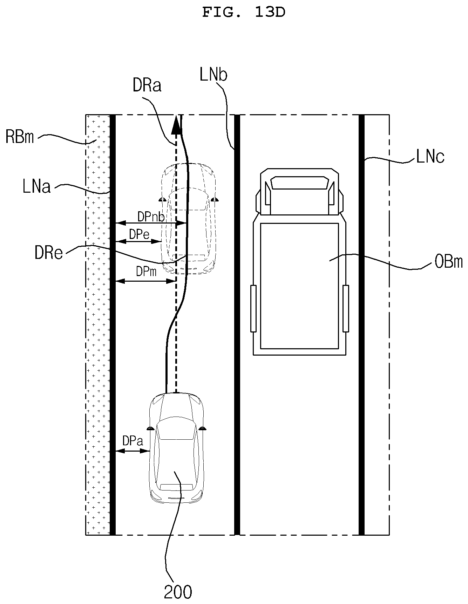

Next, FIG. 13D is a diagram illustrating yet another example of the second mode of the lane keeping mode.

Referring to FIG. 13D, the example illustrated in FIG. 13D is different from FIG. 13C in that the second vehicle OBm is located on the side of the second line LNb.

Meanwhile, the processor 175 in the signal processing device 170 may change the distance to the first line LNa in the case in which the road border or the guardrail RBm is located adjacent to the first line LNa, and the second vehicle OBm is located adjacent to the second line LNb.

For example, upon determining that the driver OWa is more fearful of the road border or the guardrail RBm than of the second vehicle OBm, the processor 175 may control the vehicle 200 to be closer to the second line LNb, of the first line LNa and the second line LNb, as illustrated in FIG. 13D.

In another example, upon determining that the driver OWa is more fearful of the second vehicle OBm than of the road border or the guardrail RBm, the processor 175 may control the vehicle 200 to be closer to the first line LNa, of the first line LNa and the second line LNb, unlike FIG. 13D.

As illustrated herein, the processor 175 may control a second distance to the first line LNa to be DPe that is greater than DPa and smaller than DPd, or may control a distance between the center of the vehicle 200 and the first line LNa to be DPnb that is greater than DPm and smaller than DPna, in the case in which the road border or the guardrail RBm is located adjacent to the first line LNa and the second vehicle OBm is located adjacent to the second line LNb. Accordingly, the vehicle-to-lane line distance may be adjusted adaptively by reflecting a driving situation during the lane keeping mode.

As a result, in response to performing the second mode of the lane keeping mode, the processor 175 in the signal processing device 170 according to an embodiment of the present disclosure may control a traveling direction of the vehicle to be DRe, rather than DRa.

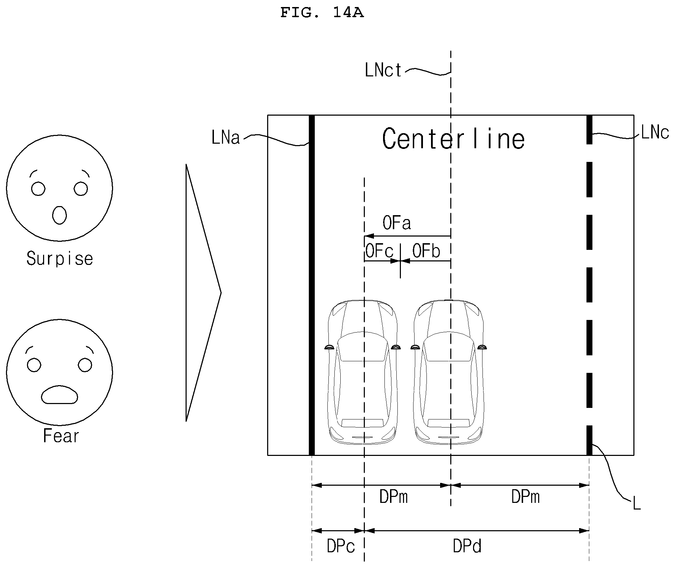

FIG. 14A is a diagram illustrating yet another example of the second mode of the lane keeping mode.

Referring to FIG. 14A, the processor 175 may detect emotion information of the driver OWa based on the vehicle internal image from the internal camera 195i.

Further, the processor 175 may perform the second mode of the lane keeping mode in the case in which the detected emotion information of the driver OWa is surprise or fear.

For example, the processor 175 may control the center of the vehicle 200 to coincide with a centerline LNct between the first line LNa and the second line LNb.

In this case, distances between the center of the vehicle 200 and the first line LNa and the second line LNb may be DPm and DPm, respectively. That is, the distance between the center of the vehicle 200 and the first line LNa may be equal to the distance between the center of the vehicle 200 and the second line LNb.

Meanwhile, in response to performing the first mode of the lane keeping mode, the processor 175 may perform the second mode of the lane keeping mode in the case in which the emotion information of the driver OWa is surprise or fear.

That is, in the second mode of the lane keeping mode, the processor 175 may control the center of the vehicle 200 to be closer to the first line LNa based on a left offset OFa.

Specifically, in the second mode of the lane keeping mode, the processor 175 may control the distance between the center of the vehicle 200 and the first line LNa to be DPc smaller than DPm.

In addition, in the second mode of the lane keeping mode, the processor 175 may control the distance between the center of the vehicle 200 and the second line LNb to be DPd that is greater than DPm. Accordingly, the vehicle-to-lane line distance may be adjusted adaptively based on the emotion information of the driver OWa.

Meanwhile, it is illustrated in the drawing that the same offset is applied in the case in which the emotion information is surprise or fear, but the processor 175 may control fear to have a greater offset than surprise.

For example, the processor 175 desirably controls a distance between the center of the vehicle 200 and the first line LNa to be DPc in the case in which the emotion information is surprise, and the processor 175 desirably controls a distance between the center of the vehicle 200 and the first line LNa to be smaller than DPc in the case in which the emotion information is fear.

Specifically, the processor 175 may control the vehicle 200 to be closer to the first line LNa in the case in which the emotion information is fear than surprise. Accordingly, the vehicle-to-lane line distance may be adjusted adaptively based on the emotion information of the driver OWa.

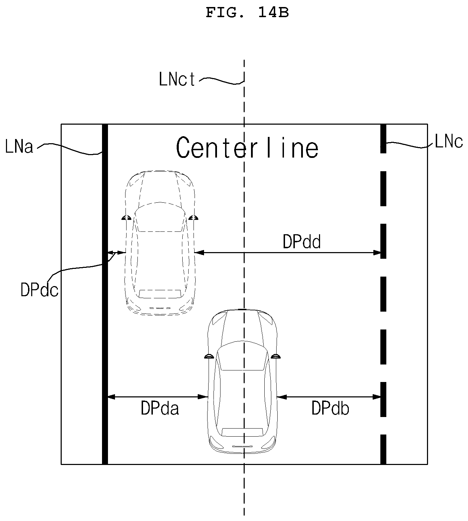

FIG. 14B is a diagram illustrating an example of performing the first mode and the second mode of the lane keeping mode.

Referring to FIG. 14B, the processor 175 may control the center of the vehicle 200 to coincide with the centerline between the first line LNa and the second line LNb, in the first mode of the lane keeping mode.

In this case, distances between the vehicle 200 and the first line LNa and the second line LNb may be DPda and DPdb, respectively. Meanwhile, DPda and DPdb may be the same level.

Meanwhile, the processor 175 may control the vehicle 200 to be closer to the first line LNa, of the first line LNa and the second line LNb, in the second mode of the lane keeping mode.

Specifically, the processor 175 may control a distance between the vehicle 200 and the first line LNa to be DPdc smaller than DPda, in the second mode of the lane keeping mode.

Further, the processor 175 may control a distance between the vehicle 200 and the second line LNb to be DPdd that is greater than DPdb, in the second mode of the lane keeping mode. Accordingly, the vehicle-to-lane line distance may be adjusted adaptively.

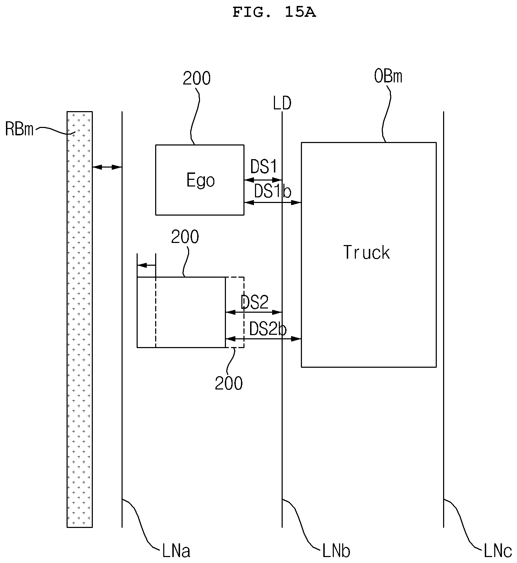

FIG. 15A is a diagram illustrating an example in which a road border and a guardrail RBm is located on a first side of a vehicle and a second vehicle is located on a second side thereof.

Referring to FIG. 15A, in the second mode of the lane keeping mode, the processor 175 may control the vehicle 200 to move closer to the first line LNa or to move further away from the second line LNb, in order to be separated from the second vehicle OBm.

As illustrated herein, the processor 175 may control DS2, which is a distance between the vehicle 200 and the second line LNb in the second mode of the lane keeping mode, to be greater than a distance between the vehicle 200 and the second line LNb in the first mode of the lane keeping mode. In this case, the distance between the vehicle 200 and the second vehicle OBm may be DS2b.

Meanwhile, the processor 175 may perform a control operation for separation from the road border or the guardrail RBm in the case in which there is a road border or a guardrail RBm in response to performing an operation for separation from the second vehicle OBm in the second mode of the lane keeping mode.

That is, the processor 175 may control the distance between the vehicle 200 and the second line LNb to be DS1 that is smaller than DS2, in the second mode of the lane keeping mode. In this case, the distance between the vehicle 200 and the second vehicle OBm may be DS1b.

As a result, in response to performing the second mode of the lane keeping mode, the processor 175 may control an offset to be smaller in the case in which objects are located on both sides than in the case in which an object is located only on one side. Accordingly, the vehicle may move less in the case in which objects are located on both sides than in the case in which the object is located only on one side.

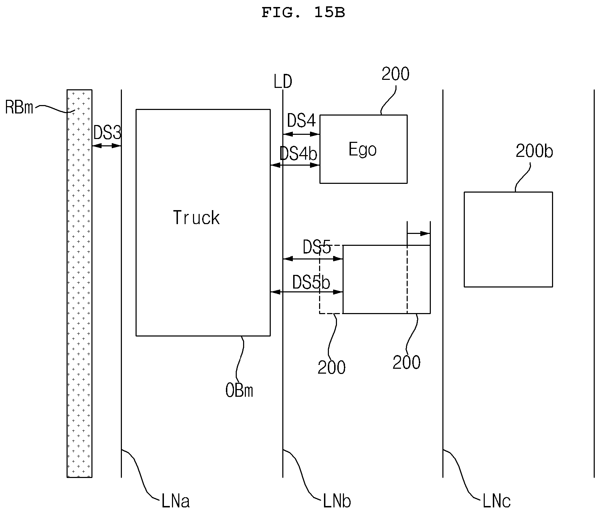

FIG. 15B is a diagram illustrating an example in which the second vehicle is located on the first side of the vehicle.

Referring to FIG. 15B, in the second mode of the lane keeping mode, the processor 175 may control the vehicle to move closer to a third line LNc or to move further away from the second line LNb, in order to be separated from the second vehicle OBm located adjacent to the second line LNb.

As illustrated herein, the processor 175 may control DS5, which is a distance between the vehicle 200 and the second line LNb in the second mode of the lane keeping mode, to be greater than a distance between the vehicle 200 and the second line LNb in the first mode of the lane keeping mode. In this case, the distance between the vehicle 200 and the second vehicle OBm may be DS5b.

Meanwhile, the processor 175 may perform a control operation for separation from the third vehicle 200c in the case in which there is a third vehicle 200c adjacent to the third line LNc, in response to performing an operation for separation from the second vehicle OBm in the second mode of the lane keeping mode.

That is, the processor 175 may control the distance between the vehicle 200 and the second line LNb to be DS4 smaller than DS5, in the second mode of the lane keeping mode. In this case, the distance between the vehicle 200 and the second vehicle OBm may be DS4b.

As a result, in response to performing the second mode of the lane keeping mode, the processor 175 may control an offset to be smaller in the case in which objects are located on both sides than in the case in which an object is located only on one side. Accordingly, the vehicle may move less in the case in which objects are located on both sides than in the case in which the object is located only on one side.

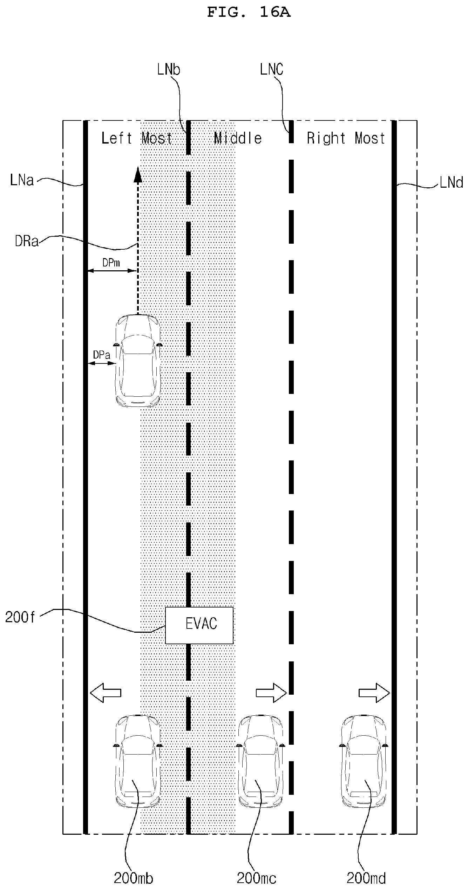

FIG. 16A is a diagram illustrating an example of performing the first mode of the lane keeping mode.

Referring to FIG. 16A, in response to performing the first mode of the lane keeping mode, the processor 175 may control a first distance DPa from the center of both lines LNa and LNb or the first line LNa to be maintained constant.

That is, in response to performing the first mode of the lane keeping mode, the processor 175 may control a distance between the vehicle 200 and the first line LNa to be the first distance DPa or may control a distance between the center of the vehicle 200 and the first line LNa to be DPm.

Meanwhile, distances between lane lines and a plurality of vehicles 200mb, 200mc, and 200md moving behind the vehicle 200 may be adjusted for an emergency vehicle 200f.

In this case, the emergency vehicle 200f may include ambulance, police vehicle, fire vehicle, and the like.

Meanwhile, the processor 175 may enter the second mode of the lane keeping mode in the case in which there is an approaching emergency vehicle behind the vehicle 200 in response to performing the first mode of the lane keeping mode.

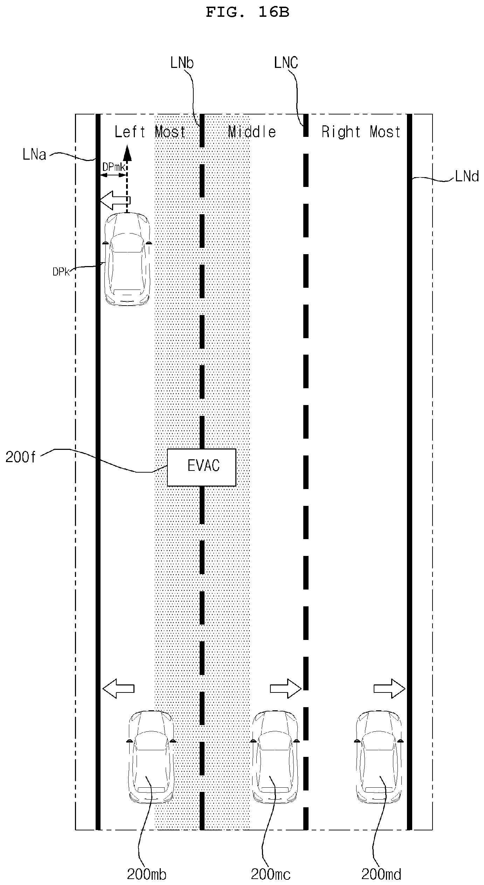

FIG. 16B is a diagram illustrating an example of performing the second mode of the lane keeping mode when the emergency vehicle approaches.

Referring to FIG. 16B, based on a rear image from the camera 195, the processor 175 may detect the emergency vehicle 200f in the rear image.

Meanwhile, in addition to detecting an object in the rear image from the camera 195, the processor 175 may detect the emergency vehicle 200f in the rear image based on the sound of ambulance or the sound of fire vehicle behind the vehicle.

Alternatively, in addition to detecting an object in the rear image from the camera 195, the processor 175 may detect the emergency vehicle 200f in the rear image based on the sound behind the vehicle or map information or traffic information related to car accidents.

Meanwhile, the processor 175 may perform the second mode of the lane keeping mode based on the detected emergency vehicle 200f.

That is, in response to performing the second mode of the lane keeping mode in response to the approaching emergency vehicle, the processor 175 may control a distance between the vehicle 200 and the first line LNa to be a second distance DPk smaller than the first distance DPa, or may control a distance between the center of the vehicle 200 and the first line LNa to be DPmk smaller than DPm. Accordingly, the vehicle-to-line distance may be adjusted adaptively based on the emergency vehicle 200f approaching from behind.

Meanwhile, the processor 175 may perform the second mode of the lane keeping mode based on the emergency vehicle 200f approaching from behind, and as the vehicle 200 becomes closer to the emergency vehicle 200f, the processor 175 may decrease the distance between the vehicle 200 and the first line LNa.

Particularly, as the vehicle 200 becomes closer to the emergency vehicle 200f, the processor 175 may decrease the distance between the vehicle 200 and the first line LNa in a stepwise manner. Accordingly, the vehicle-to-lane line distance may be adjusted adaptively based on the emergency vehicle approaching behind the vehicle.

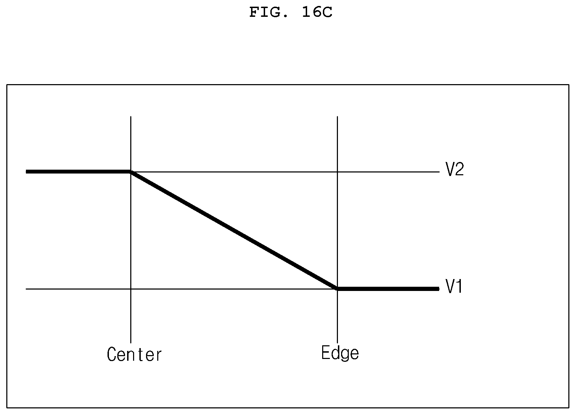

FIG. 16C is a diagram illustrating an example of offset of a distance between a vehicle and a lane line based on a vehicle speed.

Referring to FIG. 16C, when driving at a second speed, the processor 175 may control the center of the vehicle 200 to coincide with the centerline which is the center between the first line LNa and the second line LNb in the lane keeping mode.

Meanwhile, when driving at a first speed lower than the second speed, the processor 175 may control the center of the vehicle 200 to be closer to either the first line LNa or the second line LNb in the lane keeping mode.

Particularly, the processor 175 may control the vehicle 200 to coincide with the centerline which is the center between the first line LNa and the second line LNb at the second speed in the first mode of the lane keeping mode.

Meanwhile, in response to performing the second mode of the lane keeping mode, the processor 175 may reduce the vehicle speed to drive at the first speed lower than the second speed, so as to control the center of the vehicle 200 to be closer to either the first line LNa or the second line LNb. Accordingly, the vehicle-to-lane line distance may be adjusted adaptively by reflecting a driving situation during operation in the lane keeping mode.

Meanwhile, unlike the drawing, the processor 175 may decrease the second distance DPb, which is the distance between the first line LNa and the vehicle 200, or may control the vehicle 200 to be closer to the first line LNa, as the speed of the vehicle 200 increases in response to performing the second mode of the lane keeping mode. Accordingly, the vehicle-to-line distance may be adjusted adaptively based on the speed of the vehicle 200.

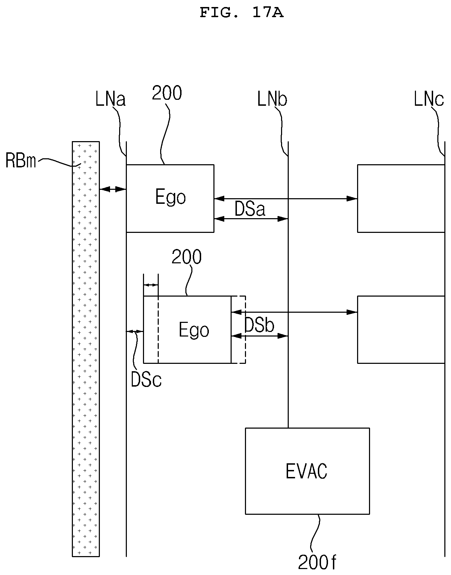

FIG. 17A is a diagram illustrating an example of adjusting the distance to the first line LNa based on a vehicle approaching from behind.

Referring to FIG. 17A, as the vehicle 200 becomes closer to the emergency vehicle 200f, the processor 175 may decrease the distance to the first line LNa in a stepwise manner.

In the drawing, an example is illustrated in which the distance to the first line LNa decreases from Dsc to zero (0).

Alternatively, as the vehicle 200 becomes closer to the emergency vehicle 200f, the processor 175 may increase the distance to the second line LNb in a stepwise manner.

Particularly, in the case where there is an approaching emergency vehicle 200f on the rear right side of the vehicle when the road border or the guardrail RBm is located on the left side of the vehicle 200, the processor 175 controls the distance between the vehicle 200 and the second line LNb to increase from DSb to Dsa. Accordingly, the vehicle-to-line distance may be adjusted adaptively based on the emergency vehicle approaching behind the vehicle.

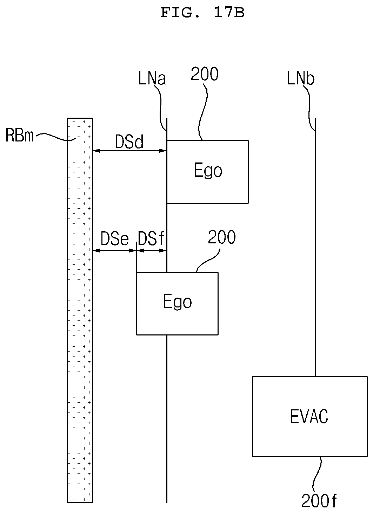

FIG. 17B is a diagram illustrating another example of adjusting the distance to the first line LNa based on a vehicle approaching from behind.

Referring to FIG. 17B, the processor 175 may decrease the distance to the first line LNa in a stepwise manner based on the approaching emergency vehicle 200f.

Particularly, in the drawing, an example is illustrated in which the vehicle 200 is located on the first line LNa.

Meanwhile, if a road border or a guardrail RBm is located on the left side of the vehicle 200, the processor 175 may adjust the distance to the road border or the guardrail RBm by considering the road border or the guardrail RBm.

That is, when the vehicle 200 is located on the first line LNa such that the distance to the road border or the guardrail RBm is DSe, the processor 175 may increase the distance to the road border or the guardrail RBm to be DSd greater than DSe.

That is, when the distance between the first line LNa and the left side of the vehicle 200 is DSf, the processor 175 may adjust the distance to be zero (0). Accordingly, the vehicle-to-line distance may be adjusted adaptively by reflecting a driving situation during operation in the lane keeping mode.

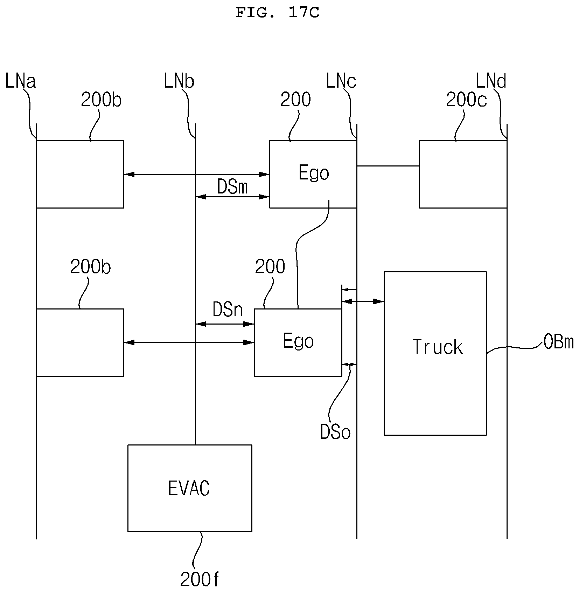

FIG. 17C is a diagram illustrating yet another example of distance adjustment based on a vehicle approaching from behind.

Referring to FIG. 17C, the processor 175 may adjust a distance between the third line LNc and the vehicle 200 traveling between the second line LNb and the third line LNc, based on an approaching emergency vehicle 200f.

For example, in the case in which the emergency vehicle 200f approaches from behind, and the second vehicle OBm is located on the right side thereof and a third vehicle 200b is located on the left side thereof, the processor 175 may decrease the distance between the vehicle 200 and the third line LNc.

It is illustrated in the drawing that in the case in which the emergency vehicle 200f approaches from behind, and the second vehicle OBm is located on the right side thereof and the third vehicle 200b is located on the left side thereof, a distance between the vehicle 200 and the third line LNc is DSo, and a distance between the vehicle 200 and the second line LNb is DSn.

In this case, DSn, which is the distance between the vehicle 200 and the second line LNb, is desirably greater than DSo which is the distance between the vehicle 200 and the third line LNc.

Meanwhile, the processor 175 may adjust the distance between the vehicle 200 and the third line LNc based on an inter-vehicle distance or the size of a vehicle located on the right side.

For example, as the size of the vehicle located on the right side decreases or the inter-vehicle distance increases, the processor 175 may decrease the distance between the vehicle 200 and the third line LNc or may increase the distance between the vehicle 200 and the second line LNb.

In the drawing, an example is illustrated in which the vehicle located on the right side is a fourth vehicle 200c which has a smaller size than the second vehicle OBm, and a distance between the fourth vehicle 200c and the third line LNc is greater than the distance between the second vehicle OBm and the third line LNc.

Accordingly, it is illustrated that in the case in which the emergency vehicle 200f approaches from behind, and the fourth vehicle 200c is located on the right side and the third vehicle 200b is located on the left side, the distance between the vehicle 200 and the third line LNc is zero (0), and the distance between the vehicle 200 and the second line LNb is DSm greater than DSn.

Meanwhile, in the case in which the emergency vehicle 200f approaches from behind, the processor 175 may increase the distance to the third vehicle 200b located on the left side so that the emergency vehicle 200f may pass, and then, the processor 175 may decrease the distance to the third vehicle 200b after the emergency vehicle 200f passes.

Meanwhile, as the distance to the third vehicle 200b located on the left side increases, the processor 175 may also control the vehicle 200 to be temporarily located on the third line LNc.

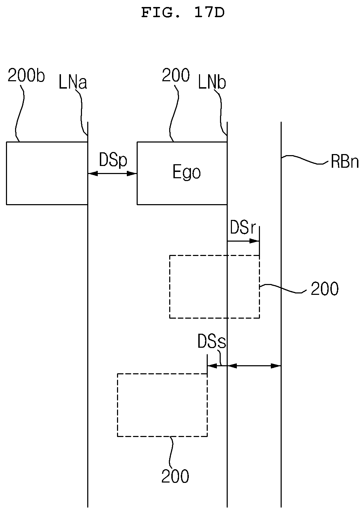

FIG. 17D is a diagram illustrating an example of distance adjustment in the case in which a vehicle is located on the left.

Referring to FIG. 17D, in the case in which the third vehicle 200b is located on the left, the processor 175 may control the vehicle 200 to be closer to the second line LNb, which is the right line, of the first line LNa and the second line LNb.

That is, the processor 175 may control the vehicle 200 to maintain a first distance DSe from the second line LNb which is the right line in the first mode of the lane keeping mode, and then, if the third vehicle 200b is located on the left side of the vehicle 200, the processor 175 may control the vehicle 200 to be located on the second line LNb, which is the right line, in the second mode as the lane keeping mode.

That is, in the second mode of the lane keeping mode, the processor 175 may control the distance between the right side of the vehicle 200 and the second line LNb to be DSr.

Meanwhile, after moving the vehicle 200 to the right side based on the third vehicle 200b on the left, the processor 175 may control the vehicle 200 to move to the left side in the case in which there is the road border or the guardrail RBm on the right side.

That is, in the case in which there is the road border or the guardrail RBm on the right side while the vehicle 200 travels on the second line LNb, the processor 175 may control the distance between the vehicle 200 and the first line LNa to be DSp. Accordingly, the vehicle-to-lane line distance may be adjusted adaptively based on the situation at the sides of the vehicle.

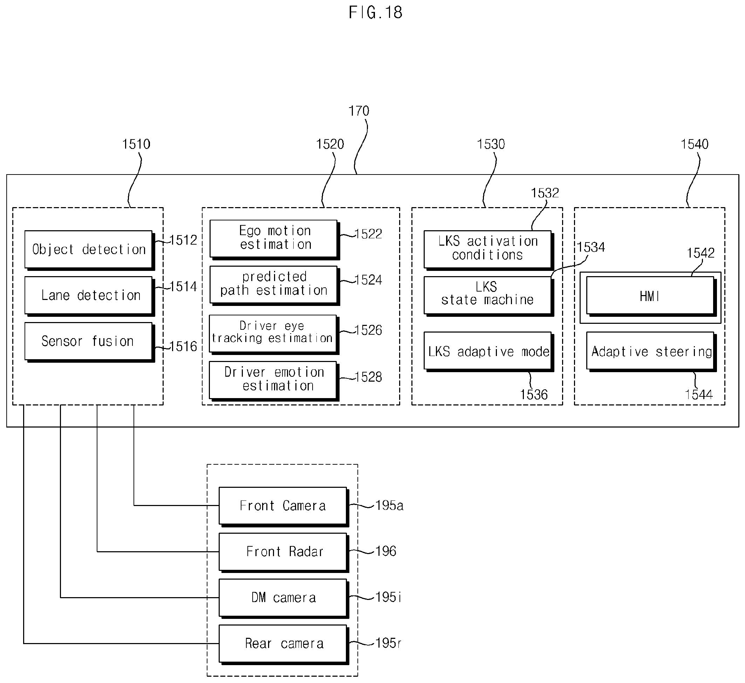

FIG. 18 is an exemplary internal block diagram of a signal processing device according to an embodiment of the present disclosure.

Referring to FIG. 18, the signal processing device 170 according to an embodiment of the present disclosure may receive a front image, an internal image, a sensing signal, or a rear image from the front camera, 195a, the internal camera 195i, the lidar 196, or the rear camera 195r, respectively.

Meanwhile, the signal processing device 170 may include a detector 1510 configured to detect an object or lane or the like based on the received image or sensing signal, a motion estimator 1520 configured to estimate a motion based on the detected object or lane, etc., a determiner 1530 configured to determine vehicle control based on the estimated motion, and an application executor 1540 configured to execute an application.

Meanwhile, the detector 1510 may include an object detector 1512 configured to detect an object in front of a vehicle from the front image or to detect a driver's face or eyes from the vehicle internal image, a lane detector 1514 configured to detect a lane in front of the vehicle from the front image, and a sensor fusion part 1516 configured to synthesize an image signal or a sensing signal.

Meanwhile, the motion estimator 1520 may include an ego-motion estimator 1522 configured to estimate an ego-motion related to estimating a traveling direction of the vehicle 200, a predicted path estimator 1524 configured to estimate a predicted path of the vehicle 200, and an eye tracking estimator 1526 configured to track a driver's eyes, and an emotion information estimator 1528 configured to calculate emotion information of a driver.

Meanwhile, the determiner 1530 may include a condition determiner 1532 configured to determine a lane keeping mode condition based on signals from the ego-motion estimator 1522, the predicted path estimator 1524, the eye tracking estimator 1526, or the emotion information estimator 1528, a state machine determiner 1534 configured to determine a lane keeping state machine, and a mode determiner 1536 configured to determine a first mode or a second mode as the lane keeping mode.

Meanwhile, the application executor 1540 may include an alert application 1542 for the lane keeping mode or an automatic steering control application 1544 for executing the second mode of the lane keeping mode, based on signals from the condition determiner 1532, the state machine determiner 1534, or the mode determiner 1536.

Meanwhile, as illustrated in FIG. 9, the processor 175 in the signal processing device 170 may execute a driver monitoring application Ndm based on the internal image, and may execute the automatic steering control application 1544 based on the front image.

In this case, the driver monitoring application Ndm may include a plurality of microservices.

For example, the driver monitoring application Ndm may include the object detector 1512, the eye tracking estimator 1526, the emotion information estimator 1528, and the like which are microservices.

Meanwhile, the processor 175 in the signal processing device 170 may execute the object detector 1512, the eye tracking estimator 1526, the emotion information estimator 1528, and the like corresponding to ASIL D which is the second safety level.

To this end, the processor 175 in the signal processing device 170 may control the virtual machine 850, corresponding to the second safety level such as ASIL D, to execute the object detector 1512, the eye tracking estimator 1526, the emotion information estimator 1528, and the like. Accordingly, the driver monitoring application Ndm may be stably executed.

Meanwhile, the processor 175 in the signal processing device 170 may execute the automatic steering control application 1544.

In this case, the automatic steering control application 1544 may include a plurality of microservices.

For example, the automatic steering control application 1544 may include, as microservices, the object detector 1512, the lane detector 1514, the ego-motion estimator 1522, the predicted path estimator 1524, the eye tracking estimator 1526, the emotion information estimator 1528, the condition determiner 1532, the state machine determiner 1534, the autonomous emergency steering (AES) mode determiner 1536, or the like.

To this end, the processor 175 in the signal processing device 170 may control the virtual machine 850, corresponding to the second safety level such as ASIL D, to execute the object detector 1512, the lane detector 1514, the ego-motion estimator 1522, the predicted path estimator 1524, the eye tracking estimator 1526, the emotion information estimator 1528, the condition determiner 1532, the state machine determiner 1534, the AES mode determiner 1536, or the like. Accordingly, the automatic steering control application 1544 may be stably executed.

Meanwhile, the processor 175 in the signal processing device 170 may execute a lane line detection application based on the front image.

In this case, the lane line detection application may include a plurality of microservices.

That is, the processor 175 in the signal processing device 170 may execute the lane line detection application, including the plurality of microservices, based on the front image.

For example, the processor 175 in the signal processing device 170 may control the virtual machine 850, corresponding to the second safety level such as ASIL D, to execute the lane line detection application or execute the plurality of microservices for the lane line detection application.

Then, the processor 175 in the signal processing device 170 may execute the alert application 1542 for the lane keeping mode, based on the vehicle internal image and the front image.

In this case, the alert application 1542 for the lane keeping mode may correspond to the first safety level such as QM or ASIL B.

To this end, the processor 175 in the signal processing device 170 may control the virtual machine 830, corresponding to the first safety level such as ASIL B, to execute the alert application 1542.

Meanwhile, the safety level of the alert application 1542 may be lower than the safety level of the driver monitoring application Ndm, the automatic steering control application 1544, or the lane line detection application.

Meanwhile, as illustrated in FIG. 9, the processor 175 may execute the plurality of virtual machines 810, 830, and 850 on the hypervisor 505, and some virtual machine 850 among the plurality of virtual machines 810, 830, and 850 may execute the driver monitoring application Ndm based on the vehicle internal image and may execute the automatic steering control application 1544 based on the front image. Accordingly, adaptive vehicle control may be performed according to the forward attention level of the driver OWa.

Meanwhile, another virtual machine 830 among the plurality of virtual machines 810, 830, and 850 executes the alert application 1542 for the lane keeping mode, and the safety level of the alert application 1542 may be lower than the safety level of the driver monitoring application Ndm, the automatic steering control application 1544, or the lane line detection application.

Meanwhile, some virtual machine 850 among the plurality of virtual machines 810, 830, and 850 executes the plurality of microservices for the automatic steering control application 1544 based on the front image, and may execute the plurality of microservices for the driver monitoring application Ndm based on the vehicle internal image.

Accordingly, the automatic steering control application 1544 and the driver monitoring application Ndm may be stably and efficiently executed. Further, vehicle control may be efficiently performed using the microservices.

It will be apparent that, although the preferred embodiments have been shown and described above, the present disclosure is not limited to the above described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to receive a front image from a camera mounted in a vehicle and to process the received image,
wherein the processor is configured to detect lines based on the front image from the camera, and to perform a lane keeping mode based on the detected lines,
wherein in a first mode of the lane keeping mode, the processor is configured to control a steering driver to maintain a first distance from a first line of first and second lines adjacent to each other, and in a second mode of the lane keeping mode, the processor is configured to control the steering driver to maintain a second distance from the first line, the second distance being different from the first distance.

2. The signal processing device of claim 1, wherein based on a rear image from the camera, the processor is configured to detect an emergency vehicle in the rear image, and to perform the second mode of the lane keeping mode based on the emergency vehicle.

3. The signal processing device of claim 1, wherein the processor is configured to perform the second mode of the lane keeping mode based on the emergency vehicle behind the vehicle, and to decrease a distance from the first line as the vehicle becomes closer to the emergency vehicle.

4. The signal processing device of claim 1, wherein in response to a road border, a guard rail, or a second vehicle having a size larger than or equal to a reference size being located on a side of the vehicle based on a side image or the front image from the camera, the processor is configured to perform the second mode of the lane keeping mode.

5. The signal processing device of claim 1, wherein the processor is configured to detect a second vehicle located on a side of the vehicle based on the side image or the front image from the camera, and to change the second distance in the second mode of the lane keeping mode based on a size of the second vehicle.

6. The signal processing device of claim 1, wherein the processor is configured to change the second distance based on a speed of the vehicle in the second mode of the lane keeping mode.

7. The signal processing device of claim 1, wherein the processor is configured to detect pedestrians on a side of the vehicle based on the side image or the front image from the camera, and to change the second distance based on a number or position of the detected pedestrians.

8. The signal processing device of claim 1, wherein the processor is configured to change the second distance in the second mode of the lane keeping mode based on driving proficiency of a driver, a number of occupants in the vehicle, or whether a passenger seat is occupied.

9. The signal processing device of claim 1, wherein the processor is configured to detect attention of a driver based on a vehicle internal image from an internal camera, and to change the second distance in the second mode of the lane keeping mode based on an attention direction of the driver.

10. The signal processing device of claim 1, wherein in a manual driving mode, the processor is configured to detect attention of a driver based on a vehicle internal image from an internal camera and to detect a distance from the first line in the front image, and
wherein the processor is configured to perform learning based on the attention of the driver and the distance from the first line and to store a learning result in a memory.

11. The signal processing device of claim 10, wherein in response to performing the second mode of the lane keeping mode, the processor is configured to set the second distance based on the learning result.

12. The signal processing device of claim 1, wherein in a manual driving mode, the processor is configured to detect emotion information of a driver based on a vehicle internal image from an internal camera and to detect a distance from the first line in the front image, and is configured to perform learning based on the emotion information of the driver and the distance from the first line and to store a learning result in a memory.

13. The signal processing device of claim 12, wherein in response to performing the second mode of the lane keeping mode, the processor is configured to set the second distance based on the learning result.

14. The signal processing device of claim 1, wherein in a manual driving mode, the processor is configured to detect a distance from the first line in the front image, and to store a speed of the vehicle and distance information from the first line in a memory, and
wherein in response to performing the second mode of the lane keeping mode, the processor is configured to set the second distance based on the speed of the vehicle and the distance information from the first line.

15. The signal processing device of claim 1, wherein the processor is configured to execute a plurality of virtual machines on a hypervisor,
wherein some virtual machine among the plurality of virtual machines is configured to execute a lane line detection application based on the front image and to execute a plurality of microservices for the lane line detection application.

16. The signal processing device of claim 15, wherein another virtual machine among the plurality of virtual machines is configured to execute an alert application for the lane keeping mode,
wherein a safety level of the alert application is lower than a safety level of the lane line detection application.

17. A signal processing device comprising a processor configured to receive a front image from a camera mounted in a vehicle and to process the received image,
wherein the processor is configured to detect lines based on the front image from the camera, and to perform a lane keeping mode based on the detected lines,
wherein in a first mode of the lane keeping mode, the processor is configured to control a steering driver to stay in a center of a first line and a second line adjacent to each other, and
wherein in a second mode of the lane keeping mode, the processor is configured to control the steering driver to be closer to either the first line or the second line.

18. The signal processing device of claim 17, wherein in the first mode of the lane keeping mode, the processor is configured to control the steering driver to maintain a first distance from the first line, and
wherein in the second mode of the lane keeping mode, the processor is configured to control the steering driver to maintain a second distance from the first line, the second distance being different from the first distance.

19. A vehicle control device comprising the signal processing device of any one of claims 1 to 18.
